# EUROPEAN PATENT SPECIFICATION

(11) **EP 3 363 204 B1**
(45) Date of publication and mention of the grant of the patent: **19.08.2020**
(21) Application number: 16785619.4
(22) Date of filing: 06.10.2016
(51) Int. Cl.: H04N 21/854, H04N 21/845, H04N 19/70, H04N 19/30

(54) **SUPPORT OF RANDOM ACCESS AND SWITCHING OF LAYERS AND SUB-LAYERS IN MULTI-LAYER VIDEO FILES**
ERMÖGLICHUNG VON DIREKTZUGRIFF UND SCHALTEN ZWISCHEN SCHICHTEN UND UNTERSCHICHTEN IN MEHRSCHICHTIGEN VIDEODATEIEN
SUPPORT D'ACCÈS ALÉATOIRE ET COMMUTATION DE COUCHES ET DE SOUS-COUCHES DANS DES FICHIERS VIDÉO MULTICOUCHES

(30) Priority: 14.10.2015 US 201562241713 P; 05.10.2016 US 201615286273
(43) Date of publication of application: 22.08.2018
(73) Proprietor: Qualcomm Incorporated, San Diego, CA 92121-1714 (US)
(72) Inventor: HENDRY, Fnu, San Diego, CA 92121-1714 (US); WANG, Ye-Kui, San Diego, CA 92121-1714 (US)
(74) Representative: Loveless, Ian Mark
(86) International application number: PCT/US2016/055754
(87) International publication number: WO 2017/066075

(56) References cited:
- WO-A2-2014/055594
- HENDRY ET AL: "On random access and switching of layers/sub-layers in L-HEVC file format", 113. MPEG MEETING; 19-10-2015 - 23-10-2015; GENEVA; (MOTION PICTURE EXPERT GROUP OR ISO/IEC JTC1/SC29/WG11),, no. m37229, 15 October 2015 (2015-10-15), XP030065597,
- "Study of ISO/IEC DIS 14496-15 4th edition - extract", 113. MPEG MEETING;19-10-2015 - 23-10-2015; GENEVA; (MOTION PICTURE EXPERT GROUP OR ISO/IEC JTC1/SC29/WG11), no. N15640, 7 December 2015 (2015-12-07), pages 91-110, XP002765115,
- "Text of ISO/IEC DIS 14496-15 4th edition - extract", 112. MPEG MEETING;22-6-2015 - 26-6-2015; WARSAW; (MOTION PICTURE EXPERT GROUP OR ISO/IEC JTC1/SC29/WG11),, no. N15479, 26 August 2015 (2015-08-26), pages 76-107, XP002765116,
- "Text of ISO/IEC 14496-12 5th edition -extract", 111. MPEG MEETING;6-2-2015 - 20-2-2015; GENEVA; (MOTION PICTURE EXPERT GROUP OR ISO/IEC JTC1/SC29/WG11),, no. N15177, 13 April 2015 (2015-04-13), pages 156,230-232, XP002765124,
- Y-K WANG ET AL: "On sample grouping type in 14496-12 and 14996-15", 111. MPEG MEETING; 6-2-2015 - 20-2-2015; GENEVA; (MOTION PICTURE EXPERT GROUP OR ISO/IEC JTC1/SC29/WG11),, no. m35921, 11 February 2015 (2015-02-11), XP030064289,
- VINOD KUMAR MALAMAL VADAKITAL ET AL: "File Format for Layered HEVC", 108. MPEG MEETING; 31-3-2014 - 4-4-2014; VALENCIA; (MOTION PICTURE EXPERT GROUP OR ISO/IEC JTC1/SC29/WG11),, no. m33156, 25 March 2014 (2014-03-25), XP030061608,

## Description

This application claims the benefit of U.S. Provisional Patent Application 62/241,713, filed October 14, 2015.

### TECHNICAL FIELD

This disclosure relates to video encoding and decoding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard, and extensions of such standards. The video devices may transmit, receive, encode, decode, and/or store digital video information more efficiently by implementing such video compression techniques.

Video compression techniques perform spatial (intra-picture) prediction and/or temporal (inter-picture) prediction to reduce or remove redundancy inherent in video sequences. For block-based video coding, a video slice (i.e., a video frame or a portion of a video frame) may be partitioned into video blocks. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicates the difference between the coded block and the predictive block. An intra-coded block is encoded according to an intra-coding mode and the residual data. For further compression, the residual data may be transformed from the pixel domain to a transform domain, resulting in residual coefficients, which then may be quantized.

In multi-view coding and scalable video coding, bitstreams of encoded video data include multiple layers. In multi-view coding, different layers may correspond to different views. In scalable video coding, layers in addition to a base layer (i.e., enhancement layers) may include encoded pictures that provide quality enhancement to lower layers of the bitstream (e.g., temporal enhancement, spatial enhancement). L-HEVC refers to extensions of HEVC that support multi-layer video coding.

Coded pictures of a "temporal sub-layer" of a layer may be removed from the layer without impacting the ability of a video decoder to correctly decode lower temporal sub-layers of the same layer. Removing the coded pictures of a temporal sub-layer may reduce the frame rate of the layer. Temporally-collocated pictures of different layers may be said to belong to the same temporal sub-layer. In general, temporal sub-layers having greater identifiers (i.e., temporal identifiers) have higher frame rates when decoded. Temporal sub-layer up-switching may refer to switching from decoding a first temporal sub-layer to decoding a second temporal sub-layer, where a temporal identifier of the second temporal sub-layer is greater than a temporal identifier of the first temporal sub-layer. Such switching may be associated with starting to forward NAL units of a certain sub-layer that has not been forwarded up until that point. In HEVC, there are two picture types associated with sub-layer switching points, namely the temporal sub-layer access (TSA) picture type and the step-wise temporal sub-layer access (STSA) picture type.

Encoded video data may be stored in a file. A file format for storage of multi-layer HEVC bitstreams (i.e., L-HEVC bitstreams) is under development. In the file format, each track of the file may include a series of samples. Each sample of a track may include one or more temporally collocated encoded pictures. Thus, a track may include encoded pictures belonging to one or more different layers. Drafts of the file format for L-HEVC have defined sample-to-group boxes that identify samples that contain TSA and STSA pictures. However, at least because a track may include encoded pictures belonging to different layers, the drafts of the file format for L-HEVC may not define sufficient information for effective temporal sub-layer switching.

WO 2014/055594 A2 discloses generating a file that comprises a plurality of samples containing coded pictures. In addition, the file contains a box identifying a sample group that contains one or more samples from among the plurality of samples, wherein the box further indicates that each sample in the sample group is a step-wise temporal sub-layer access (STSA) sample.

### SUMMARY

In general, this disclosure relates to processing of multi-layer video contents in ISO based media file formats and file formats derived based on it.

The details of one or more examples of the disclosure are set forth in the accompanying drawings and the description below.

### BRIEF DESCRIPTION OF DRAWINGS

FIG. 1 is a block diagram illustrating an example video coding system that may utilize the techniques described in this disclosure.
FIG. 2 is a conceptual diagram that illustrates an example case where pictures in a track are part of an Intra Random Access Point (IRAP) access unit (AU) but are not IRAP pictures.
FIG. 3 is a block diagram illustrating an example structure of a file, in accordance with one or more techniques of this disclosure.
FIG. 4 is a block diagram illustrating an example structure of a file, in accordance with one or more techniques of this disclosure.
FIG. 5 is a block diagram illustrating an example video encoder.
FIG. 6 is a block diagram illustrating an example video decoder.
FIG. 7 is a flowchart illustrating an example operation, in accordance with a technique of this disclosure.
FIG. 8 is a flowchart illustrating an example operation of processing video data in which a track box is generated in accordance with a technique of this disclosure.
FIG. 9 is a flowchart illustrating an example operation, in accordance with a technique of this disclosure.
FIG. 10 is a flowchart illustrating an example operation of a device for processing video data, in accordance with a technique of this disclosure.

### DETAILED DESCRIPTION

In general, this disclosure relates to storage of video contents in International Standards Organization (ISO) base media file formats (ISOBMFF) and file formats based on ISO base media file formats. Particular techniques of this disclosure support random access and switching of layers and sub-layers in multi-layer bitstreams stored in one or more tracks.

For example, a file format based on the ISO base media file format is being developed for carriage of multi-layer bitstreams of encoded video data, such as Layered High Efficiency Video Coding (L-HEVC) bitstreams. A multi-layer bitstream comprises multiple layers. Each layer comprises a sequence of encoded pictures (i.e., coded pictures) occurring at different output times. In the case of scalable video coding, the layers of a multi-layer bitstream may include a base layer and one or more enhancement layers. The base layer is decodable without reference to any of the enhancement layers. The enhancement layers may spatially or temporally enhance the base layer. For instance, an enhancement layer may have a higher frame rate than the base layer. Thus, an enhancement layer may include an encoded picture for an output time and the base layer does not include an encoded picture for that output time. In the case where a first layer of a multi-layer bitstream includes an encoded picture at an output time and a second layer of the multi-layer bitstream does not include an encoded picture for the output time, the encoded picture in the first layer is said to be unaligned with an encoded picture in the second layer. In multi-view video coding, the layers of a multi-layer bitstream may correspond to encoded pictures in different views.

A file conforming to the file format comprises a set of data structures referred to as "boxes." The boxes of a file may include media data boxes, each of which includes one or more samples. A sample may include one or more encoded pictures that are in the same access unit (i.e., that have the same output time). For instance, a sample may include encoded pictures that have the same output time, but are in different layers.

Additionally, the boxes of a file may include one or more track boxes that contain metadata for a track of the file. For instance, a track box may include a sample table box. The metadata for a track includes one or more sample description entries. Each sample is associated with one of the sample description entries of a track. A sample is said belong to a track based on the sample being listed in sample table box (STBL) of the track. Because individual samples of a track may include encoded pictures belonging to multiple layers and the encoded pictures of these layers may be unaligned, different samples of the track may include different numbers of encoded pictures.

A sample group is a group of samples in a track. The metadata for a track may include one or more sample-to-group boxes and one or more sample group description boxes. A sample-to-group box contains one or more sample group entries. A sample group description box includes one or more group description entries, also known as sample group description entries. Each group description entry includes information regarding (i.e., a description of) a sample group. Each respective sample group entry of a sample-to-group box of a track maps one or more samples of the track to a sample group. A sample group description box comprises a description of a sample group.

The samples of a sample group share a common property. For instance, the draft of the file format for carriage of L-HEVC bitstreams defines several types of sample groups. For example, a track may include one or more temporal sub-layer access (TSA) sample groups, which may be denoted as 'tsas' sample groups. Each respective sample of a 'tsas' sample group contains one or more TSA pictures. A TSA picture enables up-switching, at the TSA picture, to the sub-layer containing the TSA picture or any higher sub-layer, from the immediately lower sub-layer. In another example, a track may include one or more stepwise temporal sub-layer access (STSA) sample groups, which may be denoted as 'stsa' sample groups. Each respective sample of a 'stsa' sample group contains one or more STSA pictures. An STSA picture enables up-switching, at the STSA picture, to the sub-layer containing the STSA picture, from the immediately lower sub-layer. Thus, in contrast to a TSA picture, an STSA does not necessarily enable up-switching to any higher sub-layer, just the sub-layer containing the STSA picture.

Recent drafts of the file format for carriage of L-HEVC bitstreams do not adequately support random access and switching of layers and sub-layers in multi-layer bitstreams stored in one or more tracks. For example, the drafts of the file format for carriage of L-HEVC bitstreams do not provide a mechanism for describing target layers for 'tsas' and 'stsa' sample groups. For instance, the group description entries for 'tsas' and 'stsa' sample groups do not specify target layers.

However, the ability to determine the target layers for 'tsas' and 'stsa' samples may be beneficial to particular applications. For example, consider an SHVC bitstream having two layers with four temporal sub-layers in each layer (720p and 1080p - 15 frames per second (fps), 30 fps, 60 fps and 120 fps). In this example, suppose that due to bad network conditions, a video player drops the decoding and playback down to 1080p at 15 fps (i.e., operating a particular enhancement layer (EL) and temporal sub-layer 0). In this example, there are several possibilities to consider when an application wants to go back to higher resolution and higher frame-rate playing. For instance, if the application wants to play at the highest frame-rate, the application may need to find the access unit (AU) in which the particular EL has a TSA picture. However, an access unit that has a TSA in the base layer (BL) but not in the EL cannot be used as a point at which to start decoding the highest temporal sub-layer of the EL. In the absence of an indication of target layers in a 'tsas' group description entry, the application may determine that a sample includes a TSA, but not that the TSA is in the particular EL. Hence, without being able to determine the target layers in the 'tsas' group description entry, the application may not be able to determine whether the sample is an appropriate place for temporal sub-layer up-switching to the particular EL. A similar scenario applies with regard to 'stsa' sample groups. Thus, specifying the target layers for 'tsas' and 'stsa' sample groups as described in this disclosure may improve the functionality of computing devices (e.g., content delivery network devices, streaming servers, etc.) that assist with temporal sub-layer switching, which in turn may enhance performance of decoding devices in presenting a quality level of video data appropriate for a bandwidth of a medium or network over which encoded video data is transmitted.

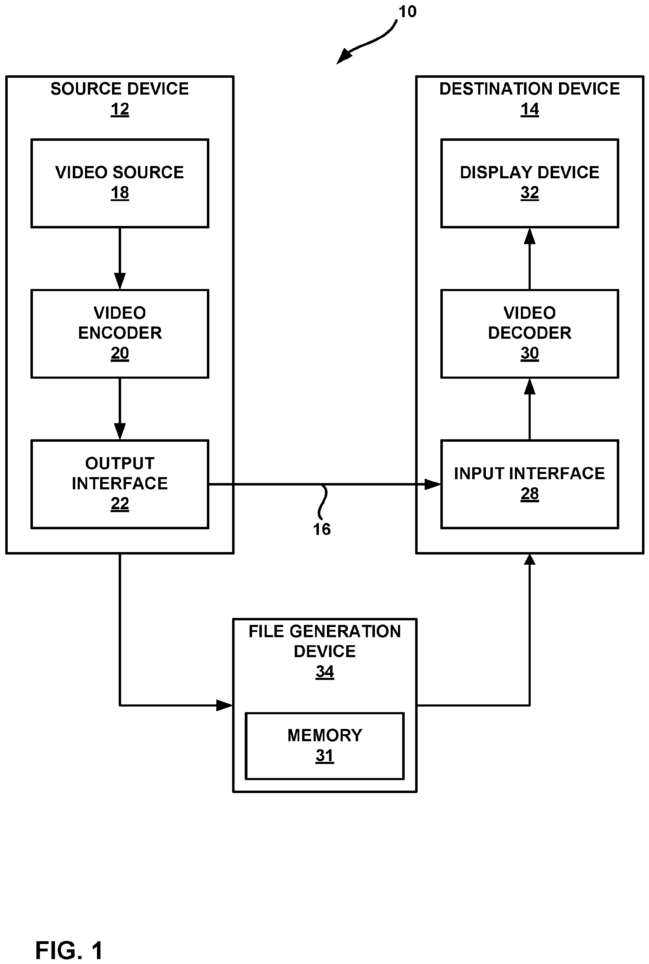

FIG. 1 is a block diagram illustrating an example video coding system 10 that may utilize the techniques of this disclosure. As used herein, the term "video coder" refers generically to both video encoders and video decoders. In this disclosure, the terms "video coding" or "coding" may refer generically to video encoding or video decoding.

As shown in FIG. 1, video coding system 10 includes a source device 12 and a destination device 14. Source device 12 generates encoded video data. Accordingly, source device 12 may be referred to as a video encoding device or a video encoding apparatus. Destination device 14 may decode the encoded video data generated by source device 12. Accordingly, destination device 14 may be referred to as a video decoding device or a video decoding apparatus. Source device 12 and destination device 14 may be examples of video coding devices or video coding apparatuses. This disclosure may use the term "video processing device" to refer to a device that processes video data. Source device 12 and destination device 14 are examples of video processing devices. Other types of video processing devices include devices that multiplex and demultiplex media data, such as MPEG-2 data streams.

Source device 12 and destination device 14 may comprise a wide range of devices, including desktop computers, mobile computing devices, notebook (e.g., laptop) computers, tablet computers, set-top boxes, telephone handsets such as so-called "smart" phones, televisions, cameras, display devices, digital media players, video gaming consoles, in-car computers, or the like.

Destination device 14 may receive encoded video data from source device 12 via a channel 16. Channel 16 may comprise one or more media or devices capable of moving the encoded video data from source device 12 to destination device 14. In one example, channel 16 may comprise one or more communication media that enable source device 12 to transmit encoded video data directly to destination device 14 in real-time. In this example, source device 12 may modulate the encoded video data according to a communication standard, such as a wireless communication protocol, and may transmit the modulated video data to destination device 14. The one or more communication media may include wireless and/or wired communication media, such as a radio frequency (RF) spectrum or one or more physical transmission lines. The one or more communication media may form part of a packet-based network, such as a local area network, a wide-area network, or a global network (e.g., the Internet). The one or more communication media may include routers, switches, base stations, or other equipment that facilitate communication from source device 12 to destination device 14.

In another example, channel 16 may include a storage medium that stores encoded video data generated by source device 12. In this example, destination device 14 may access the storage medium, e.g., via disk access or card access. The storage medium may include a variety of locally-accessed data storage media such as Blu-ray discs, DVDs, CD-ROMs, flash memory, or other suitable digital storage media for storing encoded video data.

In a further example, channel 16 may include a file server or another intermediate storage device that stores encoded video data generated by source device 12. In this example, destination device 14 may access encoded video data stored at the file server or other intermediate storage device via streaming or download. The file server may be a type of server capable of storing encoded video data and transmitting the encoded video data to destination device 14. Example file servers include web servers (e.g., for a website), file transfer protocol (FTP) servers, network attached storage (NAS) devices, and local disk drives.

Destination device 14 may access the encoded video data through a standard data connection, such as an Internet connection. Example types of data connections may include wireless channels (e.g., Wi-Fi connections), wired connections (e.g., DSL, cable modem, etc.), or combinations of both that are suitable for accessing encoded video data stored on a file server. The transmission of encoded video data from the file server may be a streaming transmission, a download transmission, or a combination of both.

The techniques of this disclosure are not limited to wireless applications or settings. The techniques may be applied to video coding in support of a variety of multimedia applications, such as over-the-air television broadcasts, cable television transmissions, satellite television transmissions, streaming video transmissions, e.g., via the Internet, encoding of video data for storage on a data storage medium, decoding of video data stored on a data storage medium, or other applications. In some examples, video coding system 10 may be configured to support one-way or two-way video transmission to support applications such as video streaming, video playback, video broadcasting, and/or video telephony.

Video coding system 10 illustrated in FIG. 1 is merely an example and the techniques of this disclosure may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In many examples, the encoding and decoding is performed by devices that do not communicate with one another, but simply encode data to memory and/or retrieve and decode data from memory.

In the example of FIG. 1, source device 12 includes a video source 18, a video encoder 20, and an output interface 22. In some examples, output interface 22 may include a modulator/demodulator (modem) and/or a transmitter. Video source 18 may include a video capture device, e.g., a video camera, a video archive containing previously-captured video data, a video feed interface to receive video data from a video content provider, and/or a computer graphics system for generating video data, or a combination of such sources of video data.

Video encoder 20 may encode video data from video source 18. In some examples, source device 12 directly transmits the encoded video data to destination device 14 via output interface 22. In other examples, the encoded video data may also be stored onto a storage medium or a file server for later access by destination device 14 for decoding and/or playback.

In the example of FIG. 1, destination device 14 includes an input interface 28, a video decoder 30, and a display device 32. In some examples, input interface 28 includes a receiver and/or a modem. Input interface 28 may receive encoded video data over channel 16. Display device 32 may be integrated with or may be external to destination device 14. In general, display device 32 displays decoded video data. Display device 32 may comprise a variety of display devices, such as a liquid crystal display (LCD), a plasma display, an organic light emitting diode (OLED) display, or another type of display device.

Video encoder 20 and video decoder 30 each may be implemented as any of a variety of suitable circuitry, such as one or more microprocessors, digital signal processors (DSPs), application-specific integrated circuits (ASICs), field-programmable gate arrays (FPGAs), discrete logic, hardware, or any combinations thereof. If the techniques are implemented partially in software, a device may store instructions for the software in a suitable, non-transitory computer-readable storage medium and may execute the instructions in hardware using one or more processors (e.g., processing circuits) to perform the techniques of this disclosure. Any of the foregoing (including hardware, software, a combination of hardware and software, etc.) may be considered to be one or more processors. Each of video encoder 20 and video decoder 30 may be included in one or more encoders or decoders, either of which may be integrated as part of a combined encoder/decoder (CODEC) in a respective device.

This disclosure may generally refer to video encoder 20 or other device "signaling" or "transmitting" certain information to another device, such as video decoder 30. The term "signaling" or "transmitting" may generally refer to the communication of syntax elements and/or other data used to decode the compressed video data. Such communication may occur in real- or near-real-time. Alternately, such communication may occur over a span of time, such as might occur when storing syntax elements to a computer-readable storage medium in an encoded bitstream at the time of encoding, which then may be retrieved by a decoding device at any time after being stored to this medium.

Furthermore, in the example of FIG. 1, video coding system 10 includes a file generation device 34. File generation device 34 may receive encoded video data generated by source device 12. File generation device 34 may generate a file that includes the encoded video data. Destination device 14 may receive the file generated by file generation device 34. In various examples, source device 12 and/or file generation device 34 may include various types of computing devices. For instance, source device 12 and/or file generation device 34 may comprise a video encoding device, a Media Aware Network Element (MANE), a DASH Aware Network Element (DANE), a server computing device, a personal computing device, a special-purpose computing device, a commercial computing device, or another type of computing device. In some examples, file generation device 34 is part of a content delivery network. Source device 12 and/or file generation device 34 may receive the encoded video data from source device 12 via a channel such as link 16. Furthermore, destination device 14 may receive the file from file generation device 34 via a channel such as link 16. File generation device 34 may be considered a video device. As shown in the example of FIG. 1, file generation device 34 may comprise a memory 31 configured to store a file that contains encoded video contents.

In some examples, source device 12 or another computing device may generate a file that includes the encoded video data. For ease of explanation, this disclosure typically describes source device 12 as generating the file. Nevertheless, it should be understood that such descriptions may be applicable to computing devices in general.

The techniques described in this disclosure may be usable with various video coding standards, including video coding techniques that are not related to a specific video coding standard. Examples of the video coding standards include ITU-T H.261, ISO/IEC MPEG-1 Visual, ITU-T H.262 or ISO/IEC MPEG-2 Visual, ITU-T H.263, ISO/IEC MPEG-4 Visual, ITU-T H.264 or ISO/IEC MPEG-4 AVC, including its Scalable Video Coding (SVC) and Multiview Video Coding (MVC) extensions, and High-Efficiency Video Coding (HEVC), also known as ITU-T H.265 and ISO/IEC 23008-2, including its scalable coding extension (i.e., scalable high-efficiency video coding, SHVC) and multiview extension (i.e., multiview high efficiency video coding, MV-HEVC). The HEVC standard may also be referred to as Rec. ITU-T H.265 ISO/IEC 23008-2.

A HEVC draft specification entitled "Draft high efficiency video coding (HEVC) version 2, combined format range extensions (RExt), scalability (SHVC), and multi-view (MV-HEVC) extensions" for JCT-VC of ITU-T SG 16 WP 3 and ISO/IEC JTC 1/SC 29/WG 11 18th Meeting: Sapporo, JP, 30 June - 9 July 2014 (JCTVC-R1013 _v6), (referred to hereinafter as "JCTVC-R1013" or "Rec. ITU-T H.265| ISO/IEC 23008-2") is available from http://phenix.int-evry.fr/jct/doc_end_user/documents/18_Sapporo/wg11/JCTVC-R1013-v6.zip. MV-HEVC is incorporated as Annex G of Rec. ITU-T H.265 | ISO/IEC 23008-2. SHVC is incorporated as Annex H of Rec. ITU-T H.265 | ISO/IEC 23008-2.

In HEVC and other video coding standards, a video sequence typically includes a series of pictures. Pictures may also be referred to as "frames." A picture may include one or more sample arrays. For instance, a picture may include three sample arrays, denoted S_{L}, Scb and Scr. S_{L} is a two-dimensional array (i.e., a block) of luma samples. Scb is a two-dimensional array of Cb chroma samples. Scr is a two-dimensional array of Cr chroma samples. In other instances, a picture may be monochrome and may only include an array of luma samples.

To generate an encoded representation of a picture, video encoder 20 may generate a set of coding tree units (CTUs). Each of the CTUs may include a coding tree block (CTB) of luma samples, two corresponding coding tree blocks of chroma samples, and syntax structures used to code the samples of the coding tree blocks. Thus, the S_{L} array of a picture may be partitioned into CTBs, the Scb array of the picture may be partitioned into CTBs, and the Scr array of the picture may be partitioned into CTBs. A coding tree block may be an NxN block of samples. A CTU may also be referred to as a "tree block" or a "largest coding unit" (LCU). The CTUs of HEVC may be broadly analogous to the macroblocks of other standards, such as H.264/AVC. However, a CTU is not necessarily limited to a particular size and may include one or more coding units (CUs). A slice may include an integer number of CTUs ordered consecutively in a scanning order, such as a raster scanning order.

To generate a coded CTU, video encoder 20 may recursively perform quad-tree partitioning on the coding tree blocks of a CTU to divide the coding tree blocks into coding blocks, hence the name "coding tree units." A coding block is an NxN block of samples. A CU may include a coding block of luma samples and two corresponding coding blocks of chroma samples of a picture that has a luma sample array, a Cb sample array and a Cr sample array, and syntax structures used to code the samples of the coding blocks. In monochrome pictures or pictures having three separate color planes, a CU may comprise a single coding block and syntax structures used to code the samples of the coding block.

Video encoder 20 may partition a coding block of a CU into one or more prediction blocks. A prediction block may be a rectangular (i.e., square or non-square) block of samples on which the same prediction is applied. A prediction unit (PU) of a CU may be a prediction block of luma samples, two corresponding prediction blocks of chroma samples of a picture, and syntax structures used to predict the prediction block samples. Video encoder 20 may generate predictive luma, Cb and Cr blocks for luma, Cb and Cr prediction blocks of each PU of the CU. In monochrome pictures or pictures having three separate color planes, a PU may comprise a single prediction block and syntax structures used to predict the prediction block. Video encoder 20 may use intra prediction or inter prediction to generate the predictive blocks for a PU.

After video encoder 20 generates predictive blocks for one or more PUs of a CU, video encoder 20 may generate a residual block of the CU. Each sample in a residual block of the CU indicates a difference between a sample in a predictive block for a PU of the CU and a corresponding sample in a coding block of the CU. For example, video encoder 20 may generate a luma residual block of the CU. Each sample in the luma residual block of the CU indicates a difference between a luma sample in a predictive luma block of a PU of the CU and a corresponding sample in the luma coding block of the CU. In addition, video encoder 20 may generate a Cb residual block of the CU. Each sample in the Cb residual block of the CU may indicate a difference between a Cb sample in a predictive Cb block of a PU of the CU and a corresponding sample in the Cb coding block of the CU. Video encoder 20 may also generate a Cr residual block of the CU. Each sample in the Cr residual block of the CU may indicate a difference between a Cr sample in a predictive Cr block for a PU of the CU and a corresponding sample in the Cr coding block of the CU.

Furthermore, video encoder 20 may use quad-tree partitioning to decompose the residual blocks (e.g., luma, Cb and Cr residual blocks) of a CU into one or more transform blocks (e.g., luma, Cb and Cr transform blocks). A transform block may be a rectangular block of samples on which the same transform is applied. A transform unit (TU) of a CU may be a transform block of luma samples, two corresponding transform blocks of chroma samples, and syntax structures used to transform the transform block samples. Thus, each TU of a CU may be associated with a luma transform block, a Cb transform block, and a Cr transform block. The luma transform block associated with the TU may be a sub-block of the luma residual block of the CU. The Cb transform block may be a sub-block of the Cb residual block of the CU. The Cr transform block may be a sub-block of the Cr residual block of the CU. In monochrome pictures or pictures having three separate color planes, a TU may comprise a single transform block and syntax structures used to transform the samples of the transform block.

Video encoder 20 may apply one or more transforms to a transform block for a TU to generate a coefficient block for the TU. For example, video encoder 20 may apply one or more transforms to a luma transform block for a TU to generate a luma coefficient block for the TU. Video encoder 20 may apply one or more transforms to a Cb transform block of a TU to generate a Cb coefficient block for the TU. Video encoder 20 may apply one or more transforms to a Cr transform block of a TU to generate a Cr coefficient block for the TU. A coefficient block may be a two-dimensional array of transform coefficients. A transform coefficient may be a scalar quantity.

After generating a coefficient block (e.g., a luma coefficient block, a Cb coefficient block or a Cr coefficient block), video encoder 20 may quantize the coefficient block. Quantization generally refers to a process in which transform coefficients are quantized to possibly reduce the amount of data used to represent the transform coefficients, providing further compression. After video encoder 20 quantizes a coefficient block, video encoder 20 may entropy encode syntax elements indicating the quantized transform coefficients. For example, video encoder 20 may perform Context-Adaptive Binary Arithmetic Coding (CABAC) on the syntax elements indicating the quantized transform coefficients. Video encoder 20 may output the entropy-encoded syntax elements in a bitstream.

Video encoder 20 may output a bitstream. The bitstream may include a sequence of bits that forms a representation of coded pictures and associated data. The bitstream may comprise a sequence of network abstraction layer (NAL) units. Each of the NAL units includes a NAL unit header and encapsulates a raw byte sequence payload (RBSP). The NAL unit header may include a syntax element that indicates a NAL unit type code. The NAL unit type code specified by the NAL unit header of a NAL unit indicates the type of the NAL unit. A RBSP may be a syntax structure containing an integer number of bytes that is encapsulated within a NAL unit. In some instances, an RBSP includes zero bits. The NAL units of the bitstream may include entropy-encoded syntax elements.

Different types of NAL units may encapsulate different types of RBSPs. For example, different types of NAL units may encapsulate different RBSPs for video parameter sets (VPSs), sequence parameter sets (SPSs), picture parameter sets (PPSs), coded slices, supplemental enhancement information (SEI), and so on. For instance, a first type of NAL unit may encapsulate an RBSP for a PPS, a second type of NAL unit may encapsulate an RBSP for a coded slice, a third type of NAL unit may encapsulate an RBSP for Supplemental Enhancement Information (SEI), and so on. NAL units that encapsulate RBSPs for video coding data (as opposed to RBSPs for parameter sets and SEI messages) may be referred to as video coding layer (VCL) NAL units. For instance, JCTVC-R1013 defines the term VCL NAL unit is a collective term for coded slice segment NAL units and the subset of NAL units that have reserved values of nal_unit_type that are classified as VCL NAL units in JCTVC-R1013. SEI contains information that is not necessary to decode the samples of coded pictures from VCL NAL units.

In the example of FIG. 1, video decoder 30 receives a bitstream generated by video encoder 20. In addition, video decoder 30 may parse the bitstream to obtain syntax elements from the bitstream. Video decoder 30 may reconstruct the pictures of the video data based at least in part on the syntax elements obtained from the bitstream. The process to reconstruct the video data may be generally reciprocal to the process performed by video encoder 20. For instance, video decoder 30 may use intra prediction or inter prediction to determine predictive blocks of the PUs of a current CU. In addition, video decoder 30 may inverse quantize coefficient blocks for TUs of the current CU. Video decoder 30 may perform inverse transforms on the coefficient blocks to reconstruct transform blocks for the TUs of the current CU. Video decoder 30 may reconstruct the coding blocks of the current CU by adding the samples of the predictive blocks for PUs of the current CU to corresponding samples of the transform blocks for the TUs of the current CU. By reconstructing the coding blocks for each CU of a picture, video decoder 30 may reconstruct the picture.

In multi-view coding, there may be multiple views of the same scene from different viewpoints. In the context of multi-view coding, the term "access unit" may be used to refer to the set of pictures that correspond to the same time instance. Thus, video data may be conceptualized as a series of access units occurring over time. A "view component" may be a coded representation of a view in a single access unit. In this disclosure, a "view" may refer to a sequence of view components associated with the same view identifier. In some examples, a view component may be a texture view component (i.e., a texture picture) or a depth view component (i.e., a depth picture). Layered HEVC (i.e., L-HEVC) may refer to techniques for transport of HEVC bitstreams that may have multiple layers of video data, such a bitstreams coded using MV-HEVC or SHVC.

In MV-HEVC and SHVC, video encoder 20 may generate a bitstream that comprises a series of NAL units. Different NAL units of the bitstream may be associated with different layers of the bitstream. A layer may be defined as a set of VCL NAL units and associated non-VCL NAL units that have the same layer identifier. A layer may be equivalent to a view in multi-view video coding. In multi-view video coding, a layer can contain all view components of the same layer with different time instances. Each view component may be a coded picture of the video scene belonging to a specific view at a specific time instance. In some examples of multi-view or 3-dimensional video coding, a layer may contain either all coded depth pictures of a specific view or coded texture pictures of a specific view. In other examples of 3D video coding, a layer may contain both texture view components and depth view components of a specific view. Similarly, in the context of scalable video coding, a layer typically corresponds to coded pictures having video characteristics different from coded pictures in other layers. Such video characteristics typically include spatial resolution and quality level (e.g., Signal-to-Noise Ratio). In HEVC and its extensions, temporal scalability may be achieved within one layer by defining a group of pictures with a particular temporal level as a sub-layer.

For each respective layer of the bitstream, data in a lower layer may be decoded without reference to data in any higher layer. In scalable video coding, for example, data in a base layer may be decoded without reference to data in an enhancement layer. In general, NAL units may only encapsulate data of a single layer. Thus, NAL units encapsulating data of the highest remaining layer of the bitstream may be removed from the bitstream without affecting the decodability of data in the remaining layers of the bitstream. In multi-view coding, higher layers may include additional view components. In SHVC, higher layers may include signal to noise ratio (SNR) enhancement data, spatial enhancement data, and/or temporal enhancement data. In MV-HEVC and SHVC, a layer may be referred to as a "base layer" if a video decoder can decode pictures in the layer without reference to data of any other layer. The base layer may also be referred to as layer 0. The base layer may conform to the HEVC base specification (e.g., Rec. ITU-T H.265 | ISO/IEC 23008-2).

In scalable video coding, layers other than the base layer may be referred to as "enhancement layers" and may provide information that enhances the visual quality of video data decoded from the bitstream. Scalable video coding can enhance spatial resolution, signal-to-noise ratio (i.e., quality) or temporal rate. In scalable video coding (e.g., SHVC), a "layer representation" may be a coded representation of a spatial layer in a single access unit. For ease of explanation, this disclosure may refer to view components and/or layer representations as "view components/layer representations" or simply "pictures."

Multi-view coding supports inter-view prediction. Inter-view prediction is similar to the inter prediction used in HEVC and may use the same syntax elements. However, when a video coder performs inter-view prediction on a current video unit (such as a PU), video encoder 20 may use, as a reference picture, a picture that is in the same access unit as the current video unit, but in a different view. In contrast, conventional inter prediction only uses pictures in different access units as reference pictures. Thus, the decoding of pictures in one layer may be dependent on the decoding of pictures in another layer. Hence, one layer may be said to depend on another layer. For any two layers, if the first layer depends on the second layer, the second layer may be referred to as a reference layer of the first layer.

In multi-view coding, a view may be referred to as a "base view" if a video decoder (e.g., video decoder 30) can decode pictures in the view without reference to pictures in any other view. When coding a picture in one of the non-base views, a video coder (such as video encoder 20 or video decoder 30) may add a picture into a reference picture list if the picture is in a different view but within a same time instance (i.e., access unit) as the picture that the video coder is currently coding. Like other inter prediction reference pictures, the video coder may insert an inter-view prediction reference picture at any position of a reference picture list.

NAL units may include headers (i.e., NAL unit headers) and payloads (e.g., RBSPs). The NAL unit headers may include layer identifier syntax elements. In HEVC, such layer identifier syntax elements may be denoted as nuh_reserved_zero_6bits syntax elements or nuh_layer_id syntax elements. NAL units that have nuh_layer_id syntax elements that specify different values belong to different layers of a bitstream. Thus, in multi-view coding, MV-HEVC, SVC, or SHVC, the nuh_layer_id syntax element of the NAL unit specifies a layer identifier (i.e., a layer ID) of the NAL unit. The nuh_layer_id syntax element of a NAL unit is equal to 0 if the NAL unit relates to a base layer in multi-view coding, MV-HEVC or SHVC. Data in a base layer of a bitstream may be decoded without reference to data in any other layer of the bitstream. If the NAL unit does not relate to a base layer in multi-view coding, MV-HEVC or SHVC, the nuh_layer_id syntax element may have a non-zero value. In multi-view coding, different layers of a bitstream may correspond to different views. In SVC or SHVC, layers other than the base layer may be referred to as "enhancement layers" and may provide information that enhances the visual quality of video data decoded from the bitstream.

Furthermore, some pictures within a single layer may be decoded without reference to other pictures within the same layer. Thus, NAL units encapsulating data of certain pictures of a layer may be removed from the bitstream without affecting the decodability of other pictures in the layer. Removing NAL units encapsulating data of such pictures may reduce the frame rate of the bitstream. A subset of pictures within a layer that may be decoded without reference to other pictures within the layer may be referred to herein as a "sub-layer" or a "temporal sub-layer."

NAL units may include temporal identifier syntax elements. In HEVC, temporal identifier syntax elements may be referred to as temporal_id syntax elements. A temporal identifier (e.g., temporal_id) syntax element of a NAL unit specifies a temporal identifier of the NAL unit. The temporal identifier of a NAL unit identifies a temporal sub-layer with which the NAL unit is associated. Thus, each temporal sub-layer of a bitstream may be associated with a different temporal identifier. If the temporal identifier of a first NAL unit is less than the temporal identifier of a second NAL unit, the data encapsulated by the first NAL unit may be decoded without reference to the data encapsulated by the second NAL unit.

A bitstream may be associated with a plurality of operation points. In some examples, each operation point of a bitstream may be associated with a set of layer identifiers (e.g., a set of nuh_layer_id or nuh_reserved_zero_6bits values) and a temporal identifier. The set of layer identifiers may be denoted as OpLayerIdSet and the temporal identifier may be denoted as TemporalID. If a NAL unit's layer identifier is in an operation point's set of layer identifiers and the NAL unit's temporal identifier is less than or equal to the operation point's temporal identifier, the NAL unit is associated with the operation point. Thus, an operation point may be a bitstream created from another bitstream by operation of a sub-bitstream extraction process with another bitstream, a target highest TemporalId, and a target layer identifier list as inputs to the sub-bitstream extraction process. The operation point may include each NAL unit that is associated with the operation point. In some examples, the operation point does not include VCL NAL units that are not associated with the operation point.

In HEVC, each NAL unit includes a syntax element (e.g., nal_unit_type) that indicates a NAL unit type of the NAL unit. Furthermore, in HEVC, video decoder 30 may identify, based on the NAL unit type of a NAL unit, the NAL unit as being associated with one of a plurality of picture types. These picture types may include Instantaneous Decoding Refresh (IDR) pictures, Clean Random Access (CRA) pictures, Temporal Sub-Layer Access (TSA) pictures, Broken Link Access (BLA) pictures and coded pictures that are not IDR, CRA, or TSA pictures.

HEVC and other video coding standards provide mechanisms for enabling random access into bitstreams. Random access refers to a decoding of a bitstream starting from a coded picture that is not the first coded picture in the bitstream. Random access to a bitstream may be needed in various video applications, such as broadcasting and streaming. Random access to a bitstream may enable users to tune in to a program at any time, to switch between different channels, to jump to specific parts of a video, or to switch to a different bitstream for stream adaptation (e.g., adaption of a bit rate, adaptation of a frame rate, adaptation of a spatial resolution, etc.). The insertion of random access point (RAP) pictures into a bitstream at regular intervals may enable random access. Example types of RAP pictures include IDR pictures, CRA pictures, and BLA pictures. Hence, IDR pictures, CRA pictures and BLA pictures are collectively referred to as random access point (RAP) pictures.

An IDR picture contains only I slices (i.e., slices in which only intra prediction is used). An IDR picture may be the first picture in the bitstream in decoding order, or may appear later in the bitstream. Each IDR picture is the first picture of a CVS in decoding order. IDR pictures, as specified in HEVC and H.264/AVC, may be used for random access. However, pictures following an IDR picture in decoding order cannot use pictures decoded prior to the IDR picture as reference. Accordingly, bitstreams relying on IDR pictures for random access can have significantly lower coding efficiency than bitstreams that use additional types of random access pictures. An IDR access unit is an access unit that contains an IDR picture.

An IDR picture may cause a decoding process to mark all reference pictures as "unused for reference." Because reference pictures marked as "unused for reference" may be removed from a decoded picture buffer (DPB) that stores the reference pictures, an IDR picture may clean out the DPB. All coded pictures that follow an IDR picture in decoding order can be decoded without inter prediction from any picture that precedes the IDR picture in decoding order. The first picture of each coded video sequence in decoding order is an IDR picture or a BLA picture, or a CRA picture that is the also the first picture of the bitstream. When a coded picture of an access unit is an IDR picture, the access unit may be referred to as an IDR access unit. In some examples, a coded video sequence is a sequence of access units that includes or consists, in decoding order, of an IDR access unit followed by zero or more access units that are not IRAP access units with NoRaslOutputFlag equal to 1 including all subsequent access units up to but not including any subsequent IDR access unit.

Ideally, channel switching and jumping in this manner should be performed with a minimum amount of delay. Channel switching and jumping may be enabled by including random access pictures at regular intervals in video bitstreams. IDR pictures may be used in both H.264/AVC and HEVC as random access pictures. In other words, the IDR picture, specified in both H.264/AVC and HEVC can be used for random access. However, because an IDR picture starts a coded video sequence and may always clean the DPB, pictures following the IDR picture in decoding order cannot use pictures decoded prior, in decoding order, to the IDR picture for reference. Consequently, bitstreams relying on IDR pictures for random access may have significantly lower coding efficiency (e.g., 6% lower coding efficiency). To improve the coding efficiency, a CRA picture in HEVC may allow pictures that follow the CRA picture in decoding order, but precede the CRA picture in output order, to use pictures decoded before the CRA for reference.

The CRA and TSA picture types are new in HEVC and are not available in the H.264/AVC specification. The CRA picture type facilitates decoding that begins from any random access point (RAP) in the middle of a video sequence. Inserting CRA pictures in a video sequence may be more efficient than inserting IDR pictures into the same video sequence. In HEVC, a bitstream starting from a CRA picture may be a conforming bitstream. That is, the portion of a bitstream that starts with a CRA picture may conform to the HEVC specification. A TSA picture can be used to indicate a valid temporal sub-layer switching point.

CRA pictures allow pictures that follow a CRA picture in decoding order, but precede the CRA picture in output order, to use pictures decoded before the CRA picture for reference. Pictures that follow a CRA picture in decoding order, but precede the CRA picture in output order, are referred to as leading pictures associated with the CRA picture (or leading pictures of the CRA picture). That is, to improve coding efficiency, CRA pictures were introduced in HEVC to allow pictures that follow a CRA picture in decoding order but precede the CRA picture in output order to use pictures decoded before the CRA picture as reference. A CRA access unit is an access unit in which the coded picture is a CRA picture.

The leading pictures of a CRA picture are correctly decodable if the decoding starts from an IDR picture or CRA picture occurring before the CRA picture in decoding order. However, the leading pictures of a CRA picture may be non-decodable when random access from the CRA picture occurs. Hence, a video decoder typically decodes the leading pictures of a CRA picture during random access decoding. To prevent error propagation from reference pictures that may not be available depending on where the decoding starts, no picture that follows a CRA picture both in decoding order and output order may use any picture that precedes the CRA picture either in decoding order or output order (which includes the leading pictures) as reference.

Broken link access (BLA) pictures were introduced in HEVC after the introduction of CRA pictures and are based on the concept of CRA pictures. A BLA picture typically originates from bitstream splicing at the position of a CRA picture, and in the spliced bitstream the splicing point CRA picture is changed to a BLA picture. An access unit that contains a RAP picture may be referred to herein as a RAP access unit. A BLA access unit is an access unit that contains a BLA picture.

One difference between BLA pictures and CRA pictures is as follows. For a CRA picture, the associated leading pictures are correctly decodable if the decoding starts from a RAP picture before the CRA picture in decoding order. However, the leading pictures associated with a CRA picture may not be correctly decodable when random access from the CRA picture occurs (i.e., when decoding starts from the CRA picture, or in other words, when the CRA picture is the first picture in the bitstream). In contrast, there may be no scenario where the leading pictures associated with a BLA picture are decodable, even when decoding starts from a RAP picture before the BLA picture in decoding order.

Some of the leading pictures associated with a particular CRA picture or a particular BLA picture may be correctly decodable even when the particular CRA picture or the particular BLA picture is the first picture in a bitstream. These leading pictures may be referred to as decodable leading pictures (DLPs). Other leading pictures may be referred to as non-decodable leading pictures (NLPs). NLPs may also be referred to as tagged for discard (TFD) pictures.

At any point in the bitstream, a device, such as a MANE, DANE, or other type of device, can start removing NAL units of higher sub-layers on the basis that the pictures in the lower sub-layers are still decodable since the decoding process for the pictures in the lower sub-layers does not depend on the NAL units of the higher sub-layers. The action of removing all NAL units with temporal identifiers higher than a certain value can be referred to as temporal down-switching. Temporal down-switching may always be possible.

Temporal sub-layer up-switching may refer to switching from decoding a first temporal sub-layer to decoding a second temporal sub-layer, where a temporal identifier of the second temporal sub-layer is greater than a temporal identifier of the first temporal sub-layer. Such switching may be associated with starting to forward NAL units of a certain sub-layer that has not been forwarded up until that point. In some examples, temporal up-switching is only possible if none of the pictures in the layer that is switched to depend on any picture in the same sub-layer prior to the point in the bitstream at which the switch was performed. Points in a bitstream at which temporal up-switching is possible may be referred to as sub-layer switching points.

In HEVC, there are two picture types associated with sub-layer switching points, namely the temporal sub-layer access (TSA) picture type and the step-wise temporal sub-layer access (STSA) picture type. The TSA and STSA picture types can be used to indicate temporal sub-layer switching points. A TSA picture enables up-switching, at the TSA picture, to the sub-layer containing the TSA picture or any higher sub-layer, from the immediately lower sub-layer. An STSA picture enables up-switching, at the STSA picture, to the sub-layer containing the STSA picture, from the immediately lower sub-layer. Thus, in contrast to a TSA picture, an STSA does not necessarily enable up-switching to any higher sub-layer, just the sub-layer containing the STSA picture. Hence, in contrast to temporal up-switching in general, step-wise temporal sub-layer up-switching may comprise the action of switching from decoding a first temporal sub-layer to decoding a second temporal sub-layer, where a temporal identifier of the second sub-layer is exactly 1 greater than a temporal identifier of the first temporal sub-layer.

In HEVC and other codecs, an intra random access point (IRAP) access unit is an access unit in which a coded picture with a layer identifier equal to 0 is an IRAP picture. An IRAP picture contains only I slices and may be a BLA picture, a CRA picture or an IDR picture. Thus, BLA pictures, CRA pictures, and IDR pictures may be examples of different types of IRAP pictures. In HEVC, the first picture in the bitstream in decoding order must be an IRAP picture. Provided the necessary parameter sets are available when they need to be activated, the IRAP picture and all subsequent non-Random Access Skipped Leading (RASL) pictures in decoding order can be correctly decoded without performing the decoding process of any pictures that precede the IRAP picture in decoding order. There may be pictures in a bitstream that contain only I slices that are not IRAP pictures.

Encoded video data may be stored in files that conform to various file format standards. File format standards include the ISO base media file format (ISOBMFF, ISO/IEC 14496-12), and other derived from the ISOBMFF, including MPEG-4 file format (ISO/IEC 14496-15), 3GPP file format (3GPP TS 26.244) and AVC file format (ISO/IEC 14496-15). Although originally designed for storage, the ISOBMFF has proven to be very valuable for streaming, e.g. for progressive download or Dynamic Adaptive Streaming over HTTP (DASH). For streaming purposes, the movie fragments defined in ISOBMFF can be used.

Draft texts of the new editions for ISO/IEC 14496-12 and 14496-15 are available at http://phenix.int-evry.fr/mpeg/doc_end_user/documents/111_Geneva/wg11/w15177-v6-w15177.zip and http://phenix.int-evry.fr/mpeg/doc_end_user/documents/112_Warsaw/wg11/w15479-v2-w15479.zip, respectively. In some examples, the draft texts of the new editions for ISO/IEC 14496-12 and 14496-15 may be referred to below as the "current draft file format specification." The ISOBMFF is used as the basis for many codec encapsulation formats, such as the AVC file format, as well as for many multimedia container formats, such as the MPEG-4 file format, the 3GPP file format (3GP), and the DVB file format.

In addition to continuous media, such as audio and video, static media, such as images, as well as metadata can be stored in a file conforming to ISOBMFF. Files structured according to the ISOBMFF may be used for many purposes, including local media file playback, progressive downloading of a remote file, segments for DASH, containers for content to be streamed and its packetization instructions, and recording of received real-time media streams.

A box is the elementary syntax structure in the ISOBMFF. A box includes a four-character coded box type, a byte count of the box, and a payload. An ISOBMFF file includes or consists of a sequence of boxes, and boxes may contain other boxes. The ISOBMFF defines various types of boxes. To allow the syntax and semantics of boxes to evolve, a box may include a version syntax element indicating a syntactical and semantical version of the box. For instance, a box with a version syntax element equal to 0 may have a first syntax while a box of the same type with a version syntax element equal to 1 may have a second, different syntax.

The boxes in a file may include a Movie box ("moov") that contains metadata for continuous media streams that are present in the file. Each of the continuous media streams may be represented in the file as a track. For instance, a movie box may contain metadata regarding a movie (e.g., logical and timing relationships between samples, and also pointers to locations of samples). Movie boxes may include several types of sub-boxes. The sub-boxes in a movie box may include one or more track boxes.

A track box may include information about an individual track of a movie. A track box may include a track header box that specifies overall information of a single track. In addition, a track box may include a media box that contains a media information box. The media information box may include a sample table box that contains data indexing media samples in the track. Information in the sample table box may be used to locate samples in time and, for each of the samples of the track, a type, size, container, and offset into that container of the sample. Thus, the metadata for a track is enclosed in (e.g., contained by) a Track box ("trak"). The media content of a track is either enclosed in a Media Data box ("mdat") or directly in a separate file. The media content for tracks may comprise or consist of a sequence of samples, such as audio or video access units.

Furthermore, the ISOBMFF specifies the following types of tracks: a media track, a hint track, and a timed metadata track. A media track contains an elementary media stream. A hint track either includes media transmission instructions or represents a received packet stream. A timed metadata track comprises time-synchronized metadata.

The metadata for each track includes a list of sample description entries. Each sample description entry provides the coding or encapsulation format used in the track and the initialization data needed for processing that format. Each sample is associated with one of the sample description entries of the track.

The ISOBMFF enables specifying sample-specific metadata with various mechanisms. Specific boxes within the Sample Table box ("stbl") have been standardized to respond to common needs. The Sample Table box contains a sample table that contains all the time and data indexing of the media samples in a track. Using the tables in the Sample Table box, it may be possible to locate samples in time, determine their type (e.g. I-frame or not), and determine their size, container, and offset into that container. For example, a Sync Sample box ("stss") is a box within a Sample Table box. A Sync Sample box ("stss") is used to list the random access samples of the track. This disclosure may refer to a sample listed by the Sync Sample box as a sync sample. A sample is considered as a sync sample if the video data NAL units in the sample indicate that the coded picture contained in the sample is an IDR picture. The sample grouping mechanism enables mapping of samples according to a four-character grouping type into groups of samples sharing the same property specified as a sample group description entry in the file. Several grouping types have been specified in the ISOBMFF.

A Movie Fragment box is a top-level box. Each Movie Fragment box provides information that would have previously been in the Movie box. A Movie Fragment box may contain one or more track fragment ("traf') boxes. Within the Movie Fragment there is a set of track fragments, zero or more per track. The track fragments in turn contain zero or more track runs, each of which documents a contiguous run of samples for that track. For instance, each track run may contain samples of pictures that are contiguous in a certain order, such as decoding order. A track fragment box is defined in the 14996-12 specification and comprises metadata for one or more track fragments. For instance, a track fragment box may include a track fragment header box indicating a track ID, a base data offset, a sample description index, a default sample duration, a default sample size, and default sample flags. A track fragment box may include one or more track fragment run boxes, each documenting a contiguous set of samples for a track. For instance, a track fragment box may include syntax elements indicating a sample count, a data offset, sample flags, a sample duration, a sample size, sample composition time offset, and so on. Within these structures, many fields are optional and can be defaulted.

A sample grouping is an assignment of each of the samples in a track to be a member of one sample group. Samples in a sample group are not required to be contiguous. Sample groups may be represented by two data structures: a SampleToGroup box and a SampleGroupDescription box. The SampleToGroup box may also be referred to as a Sample-To-Group box. The SampleGroupDescription box may also be referred to as a Sample Group Description box. The SampleToGroup box represents the assignment of samples to sample groups. A SampleGroupDescription box describes the properties of the corresponding sample group.

A sample table box may include one or more SampleToGroup boxes and one or more sample group description boxes (i.e., SampleGroupDescription boxes). A SampleToGroup box may be used to determine a sample group to which a sample belongs, along with an associated description of the sample group. In other words, a SampleToGroup box may indicate a group to which a sample belongs. A SampleToGroup box may have a box type of "sbgp."

A SampleToGroup box may include a grouping type element (e.g., grouping_type). In some instances, in this disclosure, an element of a box may also be referred to as a syntax element. The grouping type element may be an integer that identifies a type (i.e., a criterion used to form the sample groups) of a sample grouping. Furthermore, a SampleToGroup box may include one or more entries (i.e., sample group entries). Each sample group entry in a SampleToGroup box may be associated with a different, non-overlapping series of consecutive samples in the track. Each sample group entry may indicate a sample count element (e.g., sample_count) and a group description index element (e.g., group_description_index). The sample count element of a sample group entry may indicate a number of samples associated with the sample group entry. In other words, the sample count element of the sample group entry may be an integer that gives the number of consecutive samples with the same sample group descriptor. The group description index element may identify, within a SampleGroupDescription box, a group description entry that contains a description of the samples associated with the sample group entry. The group description index elements of multiple sample group entries may identify the same SampleGroupDescription box.

The ISOBMFF specification specifies six types of Stream Access Points (SAPs) for use with DASH. The first two SAP types (types 1 and 2), correspond to IDR pictures in H.264/AVC and HEVC. The third SAP type (type 3) corresponds to open-GOP random access points, hence BLA or CRA pictures in HEVC. The fourth SAP type (type 4) corresponds to gradual decoding refresh (GDR) random access points.

The current draft file format specification may present one or more problems. For instance, to assist random access and switching of layers and sub-layers in a L-HEVC file, several sample grouping mechanisms are available such as: stream access point ('sap ') sample group, random access ('rap') point sample group, sync sample ('sync') sample group, random access recovery ('roll') sample group, temporal sub-layer access ('tsas') sample group and step-wise temporal sub-layer access ('stsa') sample group.

L-HEVC allows pictures of different layers in the same access unit (AU) to be of different NAL unit types. For example, within the same AU, the picture in the base layer is an IRAP picture, whereas the picture in an enhancement layer may be a non-IRAP picture. Because L-HEVC allows pictures of different layers in the same AU to be of different NAL unit types, it is useful to indicate which layer contains the particular picture type (e.g., IRAP or TSA, etc.).

In the current draft specification for 14496-15 for storage of L-HEVC layers in a file format, a mechanism for describing target layers (i.e., layers which contain a certain type of picture type) for stream access point grouping ('sap ' sample group) has been specified. Particularly, in the current draft file format specification, the 'sap ' sample group box includes a grouping_type_parameter syntax structure that includes a target layers syntax element and a layer_id_method_idc syntax element. The target layers syntax element in a 'sap' sample group box for a track specifies target layers for SAPs. The semantics of the target layers syntax element depends on the value of the layer_id_method_idc syntax element. The layer_id_method_idc syntax element equal to 0 specifies that the target layers consist of all the layers represented by the track. layer_id_method_idc not equal to 0 is specified by derived media format specifications.

However, there may be several problems related to the mechanism for describing target layers. For example, one problem relates to the description of 'sap ' and 'roll' sample groups. The current draft file format specification includes following description:
*For video data described by an L-HEVC sample entry type, the random access recovery sample group identifies random access recovery in the entire L-HEVC bitstream and the stream access point sample group identifies random access points in the entire L-HEVC bitstream.*
However, the wording "in the entire L-HEVC bitstream" is not clear. The 'sap ' or 'roll' sample groups are track level sample groupings, not a bitstream or a file level sample groupings. That means that each track may contain a 'sap ' sample group and/or a 'roll' sample group and if the bitstream is represented with more than one tracks, there may be more than one 'sap ' or 'roll' sample group in more than one of the tracks. Each 'sap' or 'roll' sample group in a track should cover samples within the track, and possibly in other tracks containing reference layers of layers that are present in the track. Thus, it would be clearer if it is specified that the ' sap ' or 'roll' sample group identifies random access points or random access recovery points for the L-HEVC sub-bitstream for which the highest layer is contained in the track, rather than for the entire L-HEVC bitstream. In fact, the description of 'sap ' or 'roll' should be made more precise, in that any information provided by these sample groups is correct for any valid subset of the entire L-HEVC bitstream. Similar description is needed as well for any other sample groups, such as the 'rap' and 'sync' sample groups, that are applicable for multi-layer bitstream.

Another problem relates to target layer descriptions for sample groupings other than 'sap '. As described above, the case of non-aligned picture types in an access unit may occur in cases other than the case of stream access points. However, a mechanism for describing target layers is only specified for the 'sap ' sample group but is missing for other sample grouping such as for 'rap ', 'sync', 'roll', 'tsas', and 'stsa' sample groups.

Another problem relates to the scope of target layers. When decoding starts from a stream access point (e.g., in random access event), it is not only the NAL units of the track that are accessed, but all NAL units in the access unit of an operation point, including those stored in other tracks, are accessed (e.g., if the operation point's required layers are stored in more than one track). Having said that, it is natural that the scope of target layers should cover all layers of an operation point. However, in the current mechanism for target layer description for the 'sap ' sample group, the target layer describes only layers carried in the track that contains the 'sap ' sample group. Furthermore, having the target layers include only layers carried in the track that contains the sample group has issues described below.

Another problem relates to the additional work involved in getting 'sap ' sample groups for an operation point. An operation point may include one or more layers which may be carried in one or more tracks. When layers of an operation point are carried in more than one track, to be able to obtain the information on SAPs of all the required layers, it is required to fetch and combine all the 'sap ' sample group information from all the required tracks for the operation point.

Another problem relates to missing 'sap ' sample groups for an operation point. As noted above, it is required to fetch and combine all 'sap ' sample group information from all the required tracks of an operation point. However, because the 'sap ' sample group is an optional sample grouping, there is no guarantee that all tracks have such information. When a track in an operation point has no 'sap ' sample group, 'sap ' sample group information (i.e., after fetching and combining all 'sap ' sample group available in all required tracks) for the operation point is not complete.

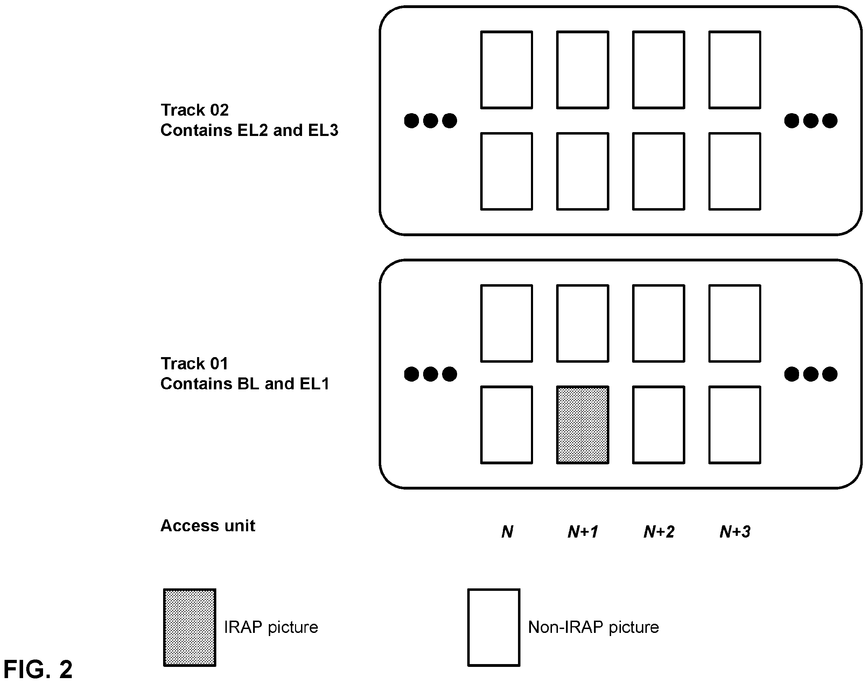

Another problem relates to the possibility of a 'sap ' sample group with no IRAP sample at all. Because IRAP pictures may be non-aligned in an AU containing pictures of multiple layers, it is possible that a track contains pictures of an IRAP AU but the pictures in that track are not IRAP pictures. FIG. 2 is a conceptual diagram that illustrates an example case where pictures in a track are part of an IRAP AU but are not IRAP pictures. Particularly, FIG. 2 illustrates an example case where pictures in a track are part of an IRAP AU but they are not IRAP pictures. In the example of FIG. 2, suppose that the desired operation point includes BL (base layer), EL1 (enhancement layer 1), EL2 (enhancement layer 2) and EL3 (enhancement layer 3) so that both Track 01 and Track 02 are required to reconstruct AUs for the operation point and also both tracks have 'sap ' sample group information. According to the definition of sync samples (and each sync sample is also a stream access point), AU *N*+*1* is a stream access point AU and EL2 and EL3 pictures in that AU should be considered a stream access point and listed in 'sap ' sample group in Track 02.

In the current file format specification, it is not clearly specified whether EL2 and EL3 pictures in AU *N*+*1*, shown in FIG. 2, must be specified as belonging to a 'sap ' sample group, if such a sample group is present. In the case such requirement is needed, then when at least one track among the tracks required for an operation point has a 'sap ' sample group, all tracks required for the operation point must have a 'sap ' sample group.

Furthermore, in the example of FIG. 2, suppose that BL and ELI pictures in AU *N*+*1*, is included in a 'sap ' sample group that is present in Track 01. In this situation, the current file format specification does not clearly specify how to ensure EL2 and EL3 pictures in AU *N*+*1* are included in the 'sap ' sample group in Track 02. In addition, a constraint requiring that 'sap ' sample groups present in tracks required for the operation points are temporally aligned may be needed but currently not specified. In general, a 'constraint' is a requirement or limitation on the content of data, such as a file or bitstream, specified by a format to which that data conforms, but that is not necessarily required by the syntax of the data.

Another problem relates to a constraint on the value of layer id_method_idc in *L-HEVC* track. In the current file format draft specification, it is constrained that when a 'sap ' sample entry is used in the context of L-HEVC, the version of the 'sap ' sample group description must be 1 and the value of layer_id_method_idc must be equal to 1. Such a constraint seems to be redundant and may prohibit more efficient ways of signaling information. As noted above, the current semantics of layer id_method_idc are actually defined as follows: layer id_method_idc specifies the semantics of target_layers. layer_id_method_idc equal to 0 specifies that the target layers consist of all the layers that are present in the track. layer_id_method_idc not equal to 0 is specified by derived media format specifications. Other values of sample group version and layer idmethod_idc can be used for more efficient signaling. For example, in the context of L-HEVC, it is possible to define that, when the version of 'sap ' sample group is equal to 0, the value of layer_id_method_idc is inferred to be equal to 0, which also means that all layers are target layers.

The following techniques may provide solutions to and/or mitigate one or more of the above-described problems. Some of the techniques may be applied independently and some of them may be applied in combination.

According to a first technique of this disclosure, for all sample groups that are applicable to a multi-layer bitstream (e.g., L-HEVC bitstream), it is required or specified that information from the sample groups are correct for any valid subset of the bitstream. In the context of HEVC, a valid subset of a bitstream means the subset of the bitstream is parsable by a file parser that conform to this file format specification (ISO/IEC 14996-15) and decodable by decoder that conforms to HEVC specification. In some examples of the first technique, the information from the sample groups is correct for any sub-bitstreams created from the entire bitstream based on operation points that are present for the bitstream. Examples of sample groups that are applicable to multi-layer bitstreams include, but are not necessarily limited to, 'sap ', 'sync', 'rap ', 'roll', 'tsas' and 'stsa' sample groups. In some examples, it is proposed that for all sample groups that are applicable to a multi-layer bitstream (e.g., L-HEVC bitstream), it is required or specified that information from the sample groups are correct for any operation point. Thus, in some examples, a device (e.g., source device 12, file generation device 34, etc.) may generate the file such that, for all sample groups applicable to a multi-layer bitstream (e.g., an L-HEVC bitstream), information from the sample groups is correct for any valid subset of the multi-layer bitstream.

In one example of the first technique, the first technique may be implemented by adding the following text to the current file format specification: "For all sample groups that are applicable to data coded with HEVC and its derivatives (e.g., L-HEVC), the information provided by the sample groups is true no matter what valid subset of the L-HEVC data is used."

Alternatively, in some examples, the first technique may be implemented by adding the following text to the current file format specification: "If a 'sap ', 'rap ', 'sync', 'roll', 'tsas' or 'stsa' sample group is used in a track which is both HEVC and L-HEVC compatible, the information provided by the sample group is true no matter what valid subset of the L-HEVC data (possibly only the HEVC data) is used."

Alternatively, in some examples, the first technique may be implemented by adding the following text to the current file format specification: "If 'sap ', 'rap ', 'sync', 'roll', 'tsas' or 'stsa' sample group is used in a track which is both HEVC and L-HEVC compatible, the information provided by the sample groups is true no matter which operation point of the L-HEVC data is used."

According to a second technique of this disclosure, it is proposed that for all sample groups that are applicable to multi-layer bitstream (e.g., a L-HEVC bitstream), the target layers (i.e., layers where the particular picture type - TSA, STSA, picture associated with recovery point SE message, etc.) are described. In some examples, this technique for describing the target layers for stream access point ('sap ') sample group is applied to other sample groups.

In accordance with the second technique of this disclosure, a device (e.g., source device 12, file generation device 34, or another device) generates, in a file for storage of a multi-layer bitstream, a track box that encloses metadata for a track. In general, generating a box may comprise storing data representing the box into a file. The track contains media content. The media content of the track may comprise or consist of a sequence of samples. Each sample of the sequence of samples may correspond to an access unit. As part of generating the track box, the device may include, in the track box, a sample description box containing a sample group description entry. The device may also include, in the track box, a sample-to-group box for the track. The sample-to-group box maps samples of the track into a sample group. The sample group comprises samples sharing a property specified by the sample group description entry. The sample-to-group box specifies target layers among layers present in the track. For instance, the sample-to-group box may include a syntax element specifying target layers among layers present in the track. Each of the target layers contains at least one picture belonging to a particular picture type. In some instances, the sample group is a 'tsas' sample group and the particular picture type is a temporal sub-layer access picture type. In some instances, the sample group is a 'stsa' sample group and the particular picture type is a step-wise temporal sub-layer access picture type.

In another example of the second technique of this disclosure, a device (e.g., destination device 14, a MANE, or another device) may obtain, from a file storing a multi-layer bitstream comprising a sequence of bits that forms a representation of pictures of the video data, a track box that encloses metadata for a track. Obtaining data, such as the operation point reference track, may comprise reading the data, parsing the data, or otherwise performing some action to get, acquire, or come into possession of the data. The track may contain media content. The media content of the track may comprise a sequence of samples. Each sample of the sequence of samples may correspond to an access unit. As part of obtaining the track box, the device may obtain, from the track box, a sample description box containing a sample group description entry. Additionally, as part of obtaining the track box, the device may obtain, from the track box, a sample-to-group box for the track. The sample-to-group box may map samples of the track into a sample group. The sample group may comprise samples sharing a property specified by the sample group description entry. Furthermore, the device may determine, based on a syntax element in the sample-to-group box, target layers among layers present in the track. Each of the target layers may contain at least one picture belonging to a particular picture type. In this example, the sample group is one of: a 'tsas' sample group and the particular picture type is a temporal sub-layer access picture type, or a 'stsa' sample group and the particular picture type is a step-wise temporal sub-layer access picture type. Furthermore, the device may identify a sample in the TSA or STSA sample group as being appropriate for temporal sub-layer up-switching to a particular temporal sub-layer based on the target layers including a layer containing coded pictures of a particular temporal sub-layer.

Furthermore, with respect to the 'rap ', 'sync', and 'roll' sample groups, being able to determine the target layers (i.e., being able to determine the layer that contains the IRAP picture(s)) may help applications (e.g., video players, file parsers) to understand up to which layer decoding can be performed and the expected output when random access event happens. For example, suppose a bitstream has two layers, if destination device 14 is instructed to fast forward (e.g., do random access to certain access unit), destination device 14 may determine a location of the next access unit (AU) to start the decoding (e.g., an AU including random access point data for the corresponding layers). The situation in which destination device 14 performs random access at an AU in which the base layer (BL) has an IRAP picture but the enhancement layer (EL) has a non-IRAP picture is called layered start-up decoding. In layered start-up decoding, video decoder 30 of destination device 14 only decodes BL pictures and decodes both BL and EL pictures when IRAP pictures occur later. Thus, in this case, destination device 14 may play back the bitstream at a low resolution for some time and display higher resolution later on, in particular, after video decoder 30 decodes the EL IRAP pictures. On the other hand, if destination device 14 performs random access at an AU in which both BL and EL have IRAP pictures, then directly starting from that point, video decoder 30 of destination device 14 decodes both BL and EL, which means destination device 14 plays directly from the high resolution. The 'rap ', 'sync', and 'roll' sample groups give information to assist destination device 14, video decoder 30, or other application to choose the sample/AU at which to start when random access is to be performed.

According to a third technique of this disclosure, the scope of the target layers in a sample grouping applicable to multiple layers is not only layers that are present in the track that contains the sample grouping but also includes all layers referred to, directly and indirectly, by the layers that are present in the track. For instance, rather than a sample grouping box (i.e., a SampleToGroup box) of a track merely indicating which layers of the track are target layers, the sample grouping box may also indicate which reference layers for layers of the track are target layers. For example, a first track may include a first layer and a second layer. In this example, a second track may include a third layer and a fourth layer. Furthermore, in this example, the third layer may be a reference layer of the second layer. In this example, a sample grouping box for the first track may indicate that the first layer and the third layer are target layers.

In some examples, the second and/or the third techniques of this disclosure may be implemented by including the following text in the file format standard.

### 9.7.6 Sample group for random access and layer / sub-layer switching

When a sample group is used in a multi-layer context, the following applies:
- If the version of the sample group description box and sample to group box is equal to 1, the syntax and semantics of grouping_type_parameter are specified as follows: 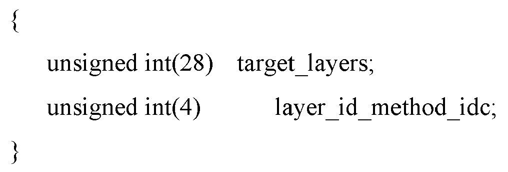 target layers specifies the indicated target layers among all layers that are present in the track containing the sample group and all layers referred to, directly and indirectly, by the layers that are present in the track containing the sample group. The semantics of target layers depends on the value of layer_id_method_idc. When layer_id_method_idc is equal to 0, target layers is reserved.
   1. layer id_methodidc specifies the semantics of target_layers. layer_id_method_idc equal to 0 specifies that the target layers consist of all the layers that are present in the track and all layers referred to, directly and indirectly, by the layers that are present in the track. layer_id_method_idc not equal to 0 is specified below.
- Otherwise if the version of the sample group description box and sample to group box is equal to 0, the target layers consists of all the layers that are present in the track and all layers referred to, directly and indirectly, by the layers that are present in the track.

The field target_layers is 28 bits in length. Each bit in the field represents a layer in a layerList which contains the layers that are present in the track and reference layers that are present in other tracks. Each bit of this field starting from the LSB shall be mapped to the list of layer IDs in the layerList, in ascending order of layer IDs.

For example, if a track is associated with layerList containing layer IDs 0, 1, 4, 10, and 29, then the layer ID 0 is mapped to the least significant bit, the layer ID 1 is mapped to the second least significant bit, the layer ID 4 is mapped to the third least significant bit, the layer ID 10 is mapped to the fourth least significant bit, and the layer ID 29 maps to the fifth least significant bit.

Picture in the access unit whose samples are included in a synch sample sample group, random access point sample group or stream access point sample group and with nuh_layer_id equal to one of the indicated target layers is an IRAP picture.

Picture in the access unit whose samples are included in a random access recovery sample group and with nuh_layer_id equal to one of the indicated target layers is a gradual decoding refresh picture.

Picture in the access unit whose samples are included in a temporal sub-layer access sample group and with nuh_layer_id equal to one of the indicated target layers is a TSA picture.

Picture in the access unit whose samples are included in a step-wise temporal sub-layer access sample group and with nuh_layer_id equal to one of the indicated target layers is an STSA picture.

**Table 11: Bit pattern for the target_layer field for an example use case described above.**

| **Bit pattern of target layers (LSB right most bit)** | **layer IDs (among 4, 10, 29) of SAPs** |
|---|---|
| 000000000000000000000011 | {1, 0} |
| 000000000000000000000101 | {4, 0} |
| 000000000000000000001101 | {10, 4, 0} |

### 9.8.2 Layer Information Sample Group

### 9.8.2.1 Definition

| | |
|---|---|
| Box Type: | 'linf' |
| Container: | SampleGroupDescriptionBox ('sgpd') |
| Mandatory: | Yes in every L-HEVC tracks |
| Quantity: | One or more 'linf' sample group entries |

The list of layers and sub layers a track carries is signalled in the Layer Information sample group. Every L-HEVC track shall carry a 'linf' sample group.

### 9.8.2.2 Syntax

```
       class LayerInfoGroupEntry extends VisualSampleGroupEntry ('linf')) {
           unsigned int (2) reserved;
           unsigned int (6) num_layers_in_track;
           for (i=0; i<num_layers_in_track; i++) {
               unsigned int (4) reserved;
               unsigned int (6) layer id;
               unsigned int (3) min_sub_layer_id;
               unsigned int (3) max_sub_layer_id;
           }
       }
```

### 9.8.2.3 Semantics

num_layers_in_track: The number of layers carried in any sample of this track associated with this sample group.
layer_id: Layer IDs for the layers carried in associated samples. The instances of this field shall be in ascending order in the loop.
min_sublayer id: The minimum TemporalId value for the sub-layers in the layer within the track.
2. max_sublayer id: The maximum TemporalId value for the sub-layers in the layer within the track.
3. Let layerList be the list of layer IDs of layers that are carried in this track and the layer IDs of layers that are carried in other tracks and that are referred to by layers carried in this track directly or indirectly. The layer IDs in the layerList are ordered in ascending order of layer ID values. For example, suppose that this track carries layers with layer IDs 4 and 5 and they refer to layers with layer ID equal to 0 and 1, then the layerList associated with this track is {0, 1, 4, 5}.

Thus, in accordance with at least the second technique of this disclosure, a device (e.g., source device 12, file generation device 34, or another device) may include, in the sample-to-group box, a first syntax element (e.g., target layers) and a second syntax element (e.g., layer_id_method_idc). The first syntax element specifies the target layers. The second syntax element specifies semantics of the first syntax element. Similarly, in an example, a first syntax element (e.g., target layers) may indicate target layers present in a track. In this example, a device (e.g., destination device 14, a MANE, or another device) may obtain, from the sample-to-group box, a second syntax element (e.g., layer_id_method_idc), the second syntax element specifying semantics of the first syntax element. In this example, the device may interpret the first syntax element according to the semantics specified by the second syntax element to determine the target layers.

According to a fourth technique of this disclosure, for all sample groups that are applicable to a multi-layer bitstream (e.g., L-HEVC bitstream), the sample group that is applicable to an operation point is the respective sample group in the track, among the required tracks for the operation point, that contains samples of the highest layer of the operation point. For instance, in a particular example, an operation point includes a first layer and a second layer. In this example, the second layer is the highest layer of the operation point. In this example, a first track of a file includes the first layer and a second track of the file includes the second layer. Furthermore, in this example, the first track and the second track both include sample groups of the same type (e.g., 'sap '). Hence, in this example, because the second track includes the highest layer of the operation point, the sample group in the second track is applicable to the operation point. A sample group comprising samples having a particular property is applicable to an operation point if encoded pictures of the operation point that are in samples of the sample group have the particular property. For instance, a 'sap ' sample group is applicable to an operation point if each sample of the ' sap ' sample group includes an encoded picture that is a stream access point and that is in the operation point. Because only a single sample group is applicable to the operation point, it may be unnecessary to fetch and combine all sample group information from all tracks that include layers of the operation point. This may address the problem described above regarding the additional work involved in getting 'sap ' sample groups for an operation point.

In some examples of the fourth technique, it is proposed that a 'sap ', 'sync', 'rap', 'roll', 'tsas' or 'stsa' sample group that is applicable to an operation point is the respective sample group in the track, among the required tracks for the operation point, that contains samples of the highest layer of the operation point. Thus, the examples of previous paragraph with regard to the 'sap ' sample group may be applicable to 'sync', 'rap', 'roll', 'tsas' or 'stsa' sample groups. For instance, a device (e.g., source device 12, file generation device 34, or another device) may signal, based on a track containing samples of a highest layer of an operation point, a sample group in the track. Similarly, a device (e.g., destination device 14, a MANE, or another device) may determine, based on a track containing samples of a highest layer of an operation point, that the track includes the sample group. Thus, such examples are similar to the example provided in the previous paragraph, but applicable to the additional sample group types. In some examples of the fourth technique, the 'sap ', 'sync', 'rap ', 'roll', 'tsas' or 'stsa' sample group that is applicable to an operation point is the set of respective sample groups where the combined target layers of the set of respective sample groups includes all layers of the operation point. The examples provided in this paragraph may address the problem described above regarding missing 'sap ' sample groups for an operation point.

According to a fifth technique of this disclosure, the following constraints are imposed for the fourth technique: First, when at least one track among the tracks required for an operation point has a 'sap ', 'rap ', 'sync', 'roll', 'tsas' or 'stsa' sample group, all tracks required for the operation point must also have the corresponding sample group, respectively. For example, suppose an operation point includes a first layer and a second layer. In this example, the first layer is in a first track and the second layer is in a second track. Furthermore, in this example, if the first track has a 'sap ', sample group, the constraint requires the second track to have a 'sap ' sample group. In this example, the same applies if the first track has a 'rap ', 'sync', 'roll', 'tsas' or 'stsa' sample group.

In accordance with a second constraint of the fifth technique of this disclosure, 'sap', 'rap ', 'sync', 'roll', 'tsas' and 'stsa' sample groups that are present in tracks required for the operation points are temporally aligned. For instance, for a particular decoded time, if the first layer has a picture, the second layer must also have a picture.

According to a sixth technique of this disclosure, the constraints in the fifth technique are proposed with the term 'sap ', 'rap ', 'sync', 'roll', 'tsas' or 'stsa' sample group being changed to all sample groups that are applicable to a multi-layer bitstream. For instance, in accordance with the sixth technique of this disclosure, rather than the constraints described above with regard to the fifth technique being only applicable to 'sap', 'rap ', 'sync', 'roll', 'tsas' or 'stsa' sample groups, the constraints described above with regard to the fifth technique are applied with regard to all types of sample groups applicable to the L-HEVC file format.

According to a seventh technique of this disclosure, when a 'sap ', 'rap', sync', 'roll', 'tsas' or 'stsa' sample group is used in the context of L-HEVC and the version of the respective sample group description is equal to 0, it is inferred that all layers in the track that contains the sample group, and possibly all layers referred to by the layers in the track directly and indirectly, are target layers. In some examples, that means when the version of the sample group description is equal to 0, the value of layer_id_method_idc is inferred to be equal to 0. For instance, a sample group description has a version. When the version of a sample group description is not equal to 0, there is additional information (i.e., so called grouping_parameter) signaled in a sample-to-group box. For those group type, this grouping_parameter is used to indicate the target layer(s). The seventh technique allows those grouping to have version equal to 0 and when the version is equal to 0, a device interpreting the file is able to determine that all layers are target layers.

According to an eighth technique of this disclosure, the constraints in the seventh technique are proposed with the terms 'sap ', 'rap ', 'sync', 'roll', 'tsas' or 'stsa' sample group being changed to all sample groups that are applicable to multi-layer bitstream. Thus, for all grouping types, when the version of the sample group description is 0, a device interpreting the file is able to determine, for all grouping types, that all layers are target layers.

A ninth technique of this disclosure involves a 'sbas' track reference. Let the lowest operating point be the one of all the operating points represented by DTQ (dependency_id, temporal_id and quality_id) combinations that has the least values of dependency_id, temporal_id and quality_id, respectively. DTQ is a concept specified in H.264/AVC. Particularly, as described in clause G.7.4.1.1 of the H.264/AVC specification, dependency_id specifies a dependency identifier for a NAL unit, temporal_id specifies a temporal identifier for a NAL unit, and quality_id specifies a quality identifier of the NAL unit. The track that has the flag "complete_representation" set and contains the lowest operating point shall be nominated as the 'scalable base track'. All the other tracks that are part of the same scalable encoded information shall be linked to this base track by way of a track reference of type 'sbas' (scalable base). According to the ninth technique of this disclosure, all sample groups that are applicable to a multi-layer bitstream (e.g., L-HEVC bitstream), when present, shall be contained only in the track that is referred to by other tracks using an 'sbas' track reference. For instance, the file format may specify a constraint requiring all sample groups that are applicable to a multi-layer bitstream to be in the scalable base track. Alternatively, in some examples, for all sample groups that are applicable to a multi-layer bitstream (e.g., L-HEVC bitstream), when present, they shall be contained only in the track that carried the operation point information.

This disclosure proposes several techniques (e.g., the first through ninth techniques described above). Some of these techniques may be applied independently and some of them may be applied in combination. For instance, examples of the first, second, third, and/or fourth techniques may be used in combination; examples of the first, second, third, and/or fifth techniques may be used in combination; examples of the first, second, third, and/or sixth techniques may be used in combination; and so on may be used in combination, which this not being an exhaustive list of the combinations.

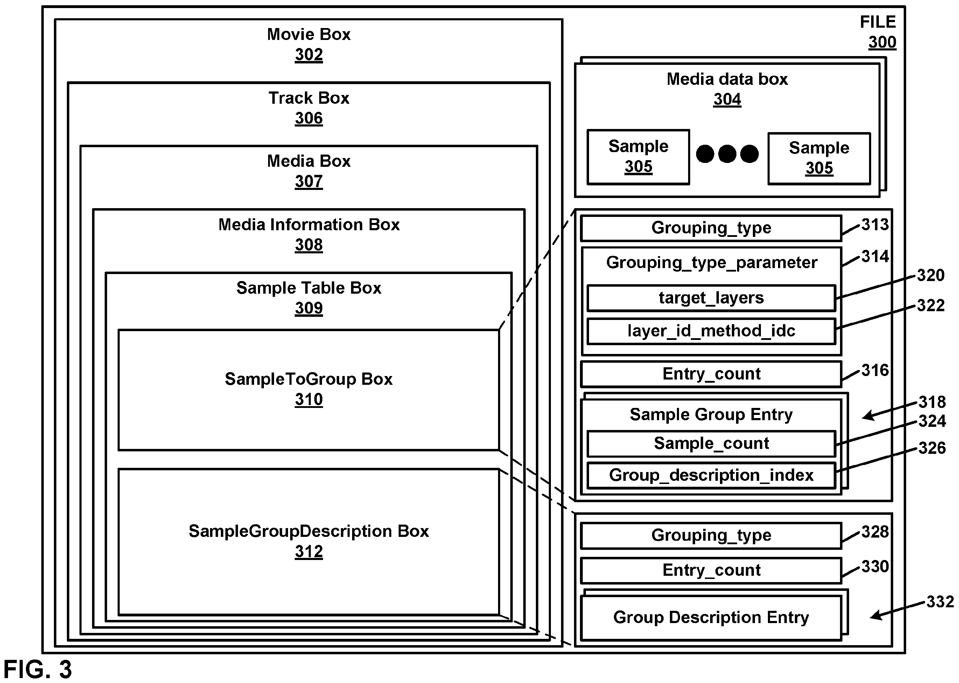

FIG. 3 is a block diagram illustrating an example structure of a file 300, in accordance with one or more techniques of this disclosure. File 300 may be generated by various devices, such as source device 12 (FIG. 1), file generation device 34 (FIG. 1), or another device. In the example of FIG. 3, file 300 includes a Movie box 302 and a plurality of Media Data boxes 304. Although illustrated in the example of FIG. 3 as being in the same file, in other examples Movie box 302 and Media Data boxes 304 may be in separate files. As indicated above, a box may be an object-oriented building block defined by a unique type identifier and length. For instance, a box may be the elementary syntax structure in ISOBMFF, including a four-character coded box type, a byte count of the box, and a payload.

Movie box 302 may contain metadata for tracks of file 300. Each track of file 300 may comprise a continuous stream of media data. Each of Media Data boxes 304 may include one or more samples 305. Each of samples 305 may comprise an audio or video access unit. As described elsewhere in this disclosure, each access unit may comprise multiple coded pictures in multi-view coding (e.g., MV-HEVC and 3D-HEVC) and scalable video coding (e.g., SHVC). For instance, an access unit may include one or more coded pictures for each layer.

Furthermore, in the example of FIG. 3, Movie box 302 includes a Track box 306. Track box 306 may enclose metadata for a track of file 300. In other examples, Movie box 302 may include multiple Track boxes for different tracks of file 300. Track box 306 includes a Media box 307. Media box 307 may contain all objects that declare information about the media data within the track. Media box 307 includes a Media Information box 308. Media Information box 308 may contain all objects that declare characteristic information of the media of the track. Media Information box 308 includes a Sample Table box 309. Sample Table box 309 may specify sample-specific metadata. Sample Table box 309 may include zero or more SampleToGroup boxes and zero or more SampleGroupDescription boxes.

In the example of FIG. 3, Sample Table box 309 includes a SampleToGroup box 310 and a SampleGroupDescription box 312. In other examples, Sample Table box 309 may include other boxes in addition to SampleToGroup box 310 and SampleGroupDescription box 312, and/or may include multiple SampleToGroup boxes and SampleGroupDescription boxes. SampleToGroup box 310 may map samples (e.g., particular ones of samples 305) to a group of samples. SampleGroupDescription box 312 may specify a property shared by the samples in the group of samples (i.e., sample group).

Furthermore, in the example of FIG. 3, SampleToGroup box 310 includes a grouping_type syntax element 313 (i.e., a grouping type syntax element), a grouping_type_parameter syntax structure 314 (i.e., a grouping type parameter syntax structure), an entry _count syntax element 316 (i.e., an entry count syntax element), and one or more sample group entries 318. Grouping_type syntax element 313 is an integer that identifies the type (i.e. criterion used to form the sample groups) of the sample grouping and links it to its sample group description table with the same value for grouping type. In some examples, at most one occurrence of SampleToGroup box 310 with the same value for grouping_type syntax element 313 exists for a track.

Grouping_type_parameter syntax structure 314 includes a target layers syntax element 320 (i.e., a target layers syntax element) and a layer_id_method_idc syntax element 322. Target_layers syntax element 320 indicates target layers for the sample group corresponding to SampleToGroup box 310. layer_id_method_idc syntax element 322 indicates semantics for interpreting target_layers syntax element 320.

Entry _count syntax element 316 indicates the number of sample group entries 318. Each of sample group entries 318 includes a sample_count syntax element 324 (i.e., a sample count syntax element) and a group_description_index syntax element 326 (i.e., a group description index syntax element). Sample_count syntax element 324 may indicate a number of samples associated with the sample group entry containing sample_count syntax element 324. Group_description_index syntax element 326 may identify, within a SampleGroupDescription box (e.g., SampleGroupDescription box 312), a group description entry that contains a description of the samples associated with the sample group entry containing group_description_index syntax element 326. Group_description_index syntax element 326 may range from 1 to the number of sample group entries in SampleGroupDescription box 312. Group_description_index syntax element 326 having the value 0 indicates that the sample is a member of no group of the type indicated by grouping_type syntax element 313.

In accordance with the second technique of this disclosure, grouping_type syntax element 313 may indicate that SampleToGroup box 310 is a 'sap ', 'sync', 'rap ', 'roll', 'tsas', or 'stsa' sample group and may include target_layers syntax element 320.

Additionally, in the example of FIG. 3, SampleGroupDescription box 312 includes a grouping_type syntax element 328, an entry_count syntax element 330, and one or more group description entries 332. Grouping_type syntax element 328 is an integer that identifies a SampleToGroup box (e.g., SampleToGroup box 310) that is associated with SampleGroupDescription box 312. Entry _count syntax element 330 indicates the number of group description entries 332 in the SampleGroupDescription box. Each of group description entries 332 may include a description of a sample group.

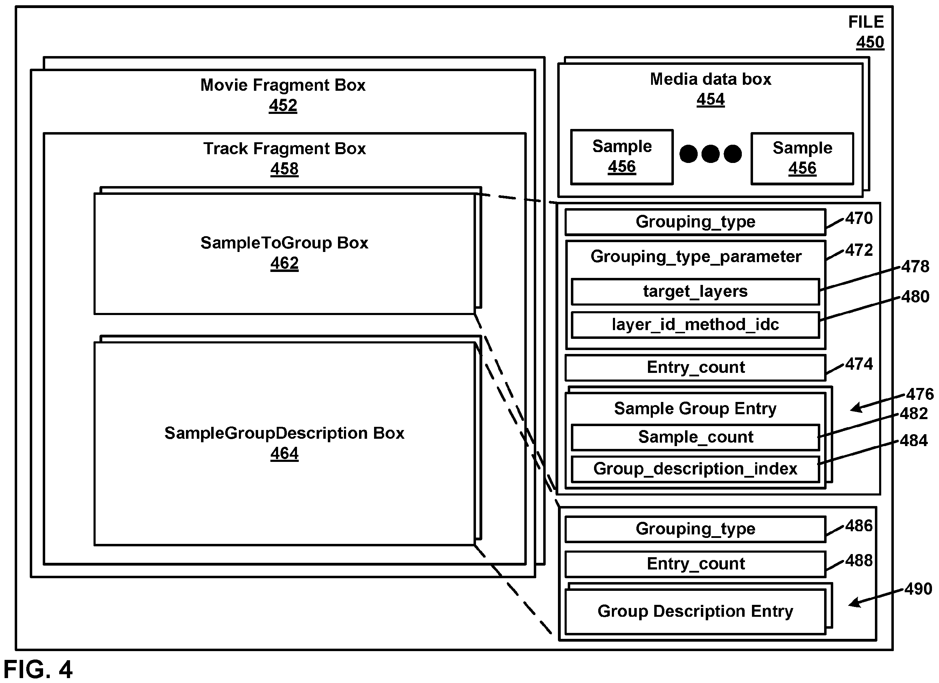

FIG. 4 is a block diagram illustrating example structures of a file 450, in accordance with one or more techniques of this disclosure. File 450 may be generated by various devices, such as source device 12 (FIG. 1), file generation device 34 (FIG. 1), or another device. In the example of FIG. 4, file 450 includes one or more Movie Fragment boxes 452 and a plurality of media data boxes 454. Movie Fragment boxes may be used to segment large media streams into smaller chunks. Although illustrated in the example of FIG. 4 as being in the same file, in other examples Movie Fragment boxes 452 and Media Data boxes 454 may be in separate files. Each of Media Data boxes 454 may include one or more samples 456. Each of the Movie Fragment boxes corresponds to a movie fragment. Each movie fragment may comprise a set of track fragments. There may be zero or more track fragments per track.

In the example of FIG. 4, a Movie Fragment box 452 provides information regarding a corresponding movie fragment. Such information would have previously been in a Movie box, such as Movie box 302 (FIG. 3). Movie Fragment box 452 may include a Track Fragment box 458. Track Fragment box 458 corresponds to a track fragment and provides information about the track fragment.

For instance, in the example of FIG. 4, Track Fragment box 458 may include one or more SampleToGroup boxes 462 and one or more SampleGroupDescription boxes 464 that contain information about the track fragment corresponding to Track Fragment box 458.

Furthermore, in the example of FIG. 4, SampleToGroup box 462 includes a grouping_type syntax element 470 (i.e., a grouping type syntax element), a grouping_type_parameter syntax structure 472 (i.e., a grouping type parameter syntax structure), an entry _count syntax element 474 (i.e., an entry count syntax element), and one or more sample group entries 476. Grouping_type_parameter syntax structure 472 includes a target layers syntax element 478 (i.e., a target layers syntax element) and a layer_id_method_idc syntax element 480. Target_layers syntax element 478 indicates target layers for the sample group corresponding to SampleToGroup box 462. layer_id_method_idc syntax element 480 indicates semantics for interpreting target layers syntax element 478. Each of sample group entries 476 includes a sample_count syntax element 482 (i.e., a sample count syntax element) and a group_description_index syntax element 484 (i.e., a group description index syntax element). Grouping_type syntax element 470, entry_count syntax element 474, target layers syntax element 478, layer_id_method_idc syntax element 480, sample_count syntax element 482, and group_description_index syntax element 484 may have the same semantics as corresponding syntax elements described with respect to the example of FIG. 3.

In accordance with the second technique of this disclosure, grouping_type syntax element 470 may indicate that SampleToGroup box 462 is a 'sap ', 'sync', 'rap ', 'roll', 'tsas', or 'stsa' sample group and may include target_layers syntax element 478.

Additionally, in the example of FIG. 4, each of SampleGroupDescription boxes 464 may include a grouping_type syntax element 486, an entry _count syntax element 488, and one or more group description entries 490. Grouping_type syntax element 486, entry _count syntax element 488, and group description entries 490 may have the same semantics as corresponding syntax elements and structures described with respect to the example of FIG. 3.

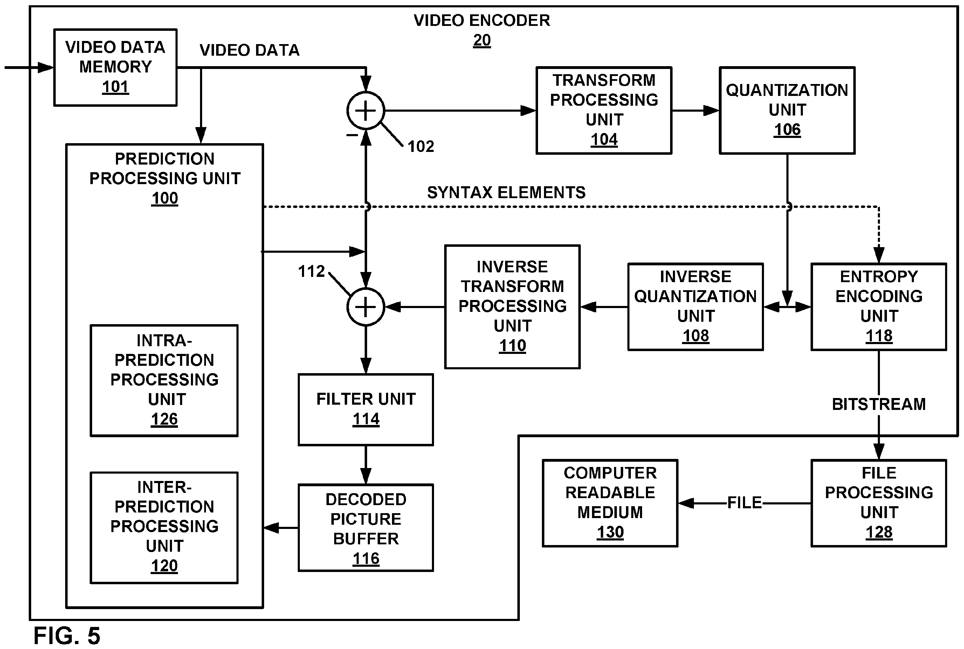

FIG. 5 is a block diagram illustrating an example video encoder 20. FIG. 5 is provided for purposes of explanation and should not be considered limiting of the techniques as broadly exemplified and described in this disclosure. For purposes of explanation, this disclosure describes video encoder 20 in the context of HEVC coding. However, the techniques of this disclosure may be applicable to other coding standards or methods.

In the example of FIG. 5, video encoder 20 includes a prediction processing unit 100, video data memory 101, a residual generation unit 102, a transform processing unit 104, a quantization unit 106, an inverse quantization unit 108, an inverse transform processing unit 110, a reconstruction unit 112, a filter unit 114, a decoded picture buffer 116, and an entropy encoding unit 118. Prediction processing unit 100 includes an inter-prediction processing unit 120 and an intra-prediction processing unit 126. Inter-prediction processing unit 120 may include a motion estimation unit and a motion compensation unit (not shown). In other examples, video encoder 20 may include more, fewer, or different functional components.

Video data memory 101 may store video data to be encoded by the components of video encoder 20. The video data stored in video data memory 101 may be obtained, for example, from video source 18 (FIG. 1). Decoded picture buffer 116 may be a reference picture memory that stores reference video data for use in encoding video data by video encoder 20, e.g., in intra- or inter-coding modes. Video data memory 101 and decoded picture buffer 116 may be formed by any of a variety of memory devices, such as dynamic random access memory (DRAM), including synchronous DRAM (SDRAM), magnetoresistive RAM (MRAM), resistive RAM (RRAM), or other types of memory devices. Video data memory 101 and decoded picture buffer 116 may be provided by the same memory device or separate memory devices. In various examples, video data memory 101 may be on-chip with other components of video encoder 20, or off-chip relative to those components.

Video encoder 20 receives video data. Video encoder 20 may encode each CTU in a slice of a picture of the video data. Each of the CTUs may be associated with equally-sized luma coding tree blocks (CTBs) and corresponding CTBs of the picture. As part of encoding a CTU, prediction processing unit 100 may perform quad-tree partitioning to divide the CTBs of the CTU into progressively-smaller blocks. The smaller block may be coding blocks of CUs.

Video encoder 20 may encode CUs of a CTU to generate encoded representations of the CUs (i.e., coded CUs). As part of encoding a CU, prediction processing unit 100 may partition the coding blocks associated with the CU among one or more PUs of the CU. Thus, each PU may be associated with a luma prediction block and corresponding chroma prediction blocks. Video encoder 20 and video decoder 30 may support PUs having various sizes.

Inter-prediction processing unit 120 may generate predictive data for a PU by performing inter prediction on each PU of a CU. The predictive data for the PU may include predictive blocks of the PU and motion information for the PU. Intra-prediction processing unit 126 may generate predictive data for a PU by performing intra prediction on the PU. The predictive data for the PU may include predictive blocks of the PU and various syntax elements.

Prediction processing unit 100 may select the predictive data for PUs of a CU from among the predictive data generated by inter-prediction processing unit 120 for the PUs or the predictive data generated by intra-prediction processing unit 126 for the PUs. In some examples, prediction processing unit 100 selects the predictive data for the PUs of the CU based on rate/distortion metrics of the sets of predictive data. The predictive blocks of the selected predictive data may be referred to herein as the selected predictive blocks.

Residual generation unit 102 may generate, based on the coding blocks for a CU and the selected predictive blocks for the PUs of the CU, residual blocks for the CU. For instance, residual generation unit 102 may generate the residual blocks of the CU such that each sample in the residual blocks has a value equal to a difference between a sample in a coding block of the CU and a corresponding sample in a corresponding selected predictive block of a PU of the CU.

Transform processing unit 104 may perform quad-tree partitioning to partition the residual blocks associated with a CU into transform blocks associated with TUs of the CU. Thus, a TU may be associated with a luma transform block and two chroma transform blocks. Transform processing unit 104 may generate transform coefficient blocks for each TU of a CU by applying one or more transforms to the transform blocks of the TU. In such examples, the transform block may be treated as a transform coefficient block.

Quantization unit 106 may quantize the transform coefficients in a coefficient block. The quantization process may reduce the bit depth associated with some or all of the transform coefficients. Inverse quantization unit 108 and inverse transform processing unit 110 may apply inverse quantization and inverse transforms to a coefficient block, respectively, to reconstruct a residual block from the coefficient block. Reconstruction unit 112 may add the reconstructed residual block to corresponding samples from one or more predictive blocks generated by prediction processing unit 100 to produce a reconstructed transform block associated with a TU. By reconstructing transform blocks for each TU of a CU in this way, video encoder 20 may reconstruct the coding blocks of the CU.

Filter unit 114 may perform one or more deblocking operations to reduce blocking artifacts in the coding blocks associated with a CU. Decoded picture buffer 116 may store the reconstructed coding blocks after filter unit 114 performs the one or more deblocking operations on the reconstructed coding blocks. Inter-prediction processing unit 120 may use a reference picture that contains the reconstructed coding blocks to perform inter prediction on PUs of other pictures. In addition, intra-prediction processing unit 126 may use reconstructed coding blocks in decoded picture buffer 116 to perform intra prediction on other PUs in the same picture as the CU.

Entropy encoding unit 118 may receive data from other functional components of video encoder 20. For example, entropy encoding unit 118 may receive coefficient blocks from quantization unit 106 and may receive syntax elements from prediction processing unit 100. Entropy encoding unit 118 may perform one or more entropy encoding operations on the data to generate entropy-encoded data. Video encoder 20 may output a bitstream that includes entropy-encoded data generated by entropy encoding unit 118. For instance, the bitstream may include data that represents a RQT for a CU.

Furthermore, in the example of FIG. 5, a file processing unit 128 may obtain the bitstream generated by video encoder 20. File processing unit 128 may be implemented by one or more processors or processing circuits of a device, such as source device 12, file generation device 34, a content delivery network device, or another type of device. File processing unit 128 may generate a file that stores the bitstream generated by video encoder 20. Computer readable medium 130 may receive the file generated by file processing unit 128. In some examples, computer readable medium 130 comprises a computer readable storage medium such as a memory, optical disc, magnetic disk, or other type of non-transitory storage medium from which a computing device is able to read data. In some examples where computer readable medium 130 comprises a computer readable storage medium, the computer readable storage medium may form part of a device, such as source device 12 (FIG. 1), file generation device 34 (FIG. 1), a content delivery network device, or another type of device. In some examples, computer readable medium 130 comprises a computer-readable communication medium, such as an optical fiber, communication cable, electro-magnetic wave, or other types of media from which a computing device is able to read data.

In accordance with a technique of this disclosure, file processing unit 128 may generate a track box that contains metadata for a track. As part of generating the track box, file processing unit 128 may generate, in the track box, a sample description box containing a sample group description entry. Additionally, as part of generating the track box, file processing unit 128 may generate, in the track box, a sample-to-group box for the track. The sample-to-group box maps samples of the track into a sample group, the sample group comprising samples sharing a property specified by the sample group description entry. The sample-to-group box may specify target layers among layers present in the track. Each of the target layers containing at least one picture belonging to a particular picture type. For instance, the sample group is one of: a TSA sample group and the particular picture type is a temporal sub-layer access picture type, or a STSA sample group and the particular picture type is a step-wise temporal sub-layer access picture type.

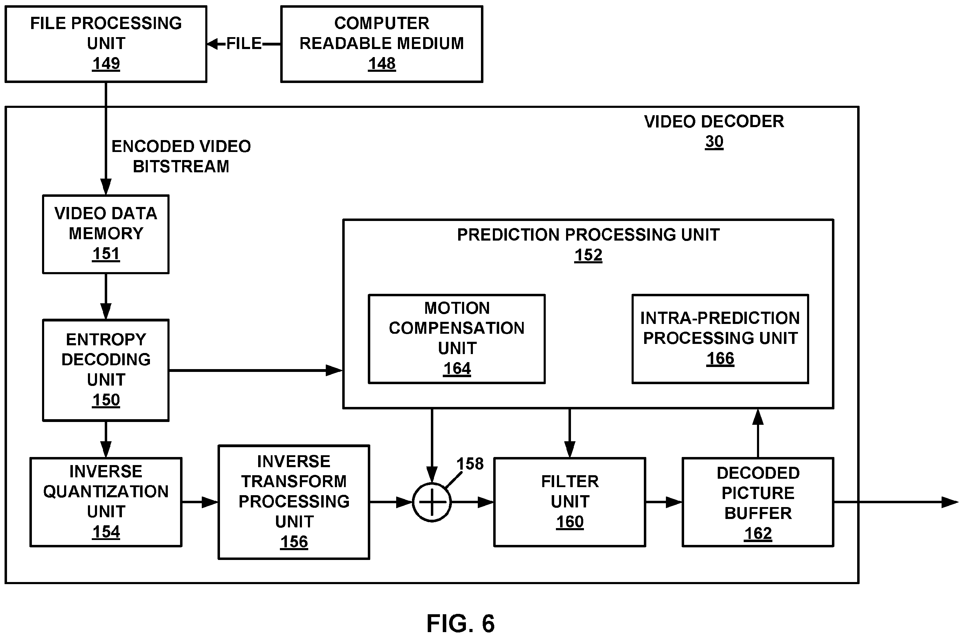

FIG. 6 is a block diagram illustrating an example video decoder 30. FIG. 6 is provided for purposes of explanation and is not limiting on the techniques as broadly exemplified and described in this disclosure. For purposes of explanation, this disclosure describes video decoder 30 in the context of HEVC coding. However, the techniques of this disclosure may be applicable to other coding standards or methods.

In the example of FIG. 6, video decoder 30 includes an entropy decoding unit 150, video data memory 151, a prediction processing unit 152, an inverse quantization unit 154, an inverse transform processing unit 156, a reconstruction unit 158, a filter unit 160, and a decoded picture buffer 162. Prediction processing unit 152 includes a motion compensation unit 164 and an intra-prediction processing unit 166. In other examples, video decoder 30 may include more, fewer, or different functional components.

Video data memory 151 may store video data, such as an encoded video bitstream, to be decoded by the components of video decoder 30. The video data stored in video data memory 151 may be obtained, for example, from channel 16, e.g., from a local video source, such as a camera, via wired or wireless network communication of video data, or by accessing physical data storage media. Video data memory 151 may form a coded picture buffer (CPB) that stores encoded video data from an encoded video bitstream. Decoded picture buffer 162 may be a reference picture memory that stores reference video data for use in decoding video data by video decoder 30, e.g., in intra- or inter-coding modes. Video data memory 151 and decoded picture buffer 162 may be formed by any of a variety of memory devices, such as dynamic random access memory (DRAM), including synchronous DRAM (SDRAM), magnetoresistive RAM (MRAM), resistive RAM (RRAM), or other types of memory devices. Video data memory 151 and decoded picture buffer 162 may be provided by the same memory device or separate memory devices. In various examples, video data memory 151 may be on-chip with other components of video decoder 30, or off-chip relative to those components.

Video data memory 151 receives and stores encoded video data (e.g., NAL units) of a bitstream. Entropy decoding unit 150 may receive encoded video data (e.g., NAL units) from the CPB and parse the NAL units to obtain syntax elements. Entropy decoding unit 150 may entropy decode entropy-encoded syntax elements in the NAL units. Prediction processing unit 152, inverse quantization unit 154, inverse transform processing unit 156, reconstruction unit 158, and filter unit 160 may generate decoded video data based on the syntax elements extracted from the bitstream. Entropy decoding unit 150 may perform a process generally reciprocal to that of entropy encoding unit 118.

In addition to obtaining syntax elements from the bitstream, video decoder 30 may perform a reconstruction operation on a non-partitioned CU. To perform the reconstruction operation on a CU, video decoder 30 may perform a reconstruction operation on each TU of the CU. By performing the reconstruction operation for each TU of the CU, video decoder 30 may reconstruct residual blocks of the CU.

As part of performing a reconstruction operation on a TU of a CU, inverse quantization unit 154 may inverse quantize, i.e., de-quantize, coefficient blocks associated with the TU. After inverse quantization unit 154 inverse quantizes a coefficient block, inverse transform processing unit 156 may apply one or more inverse transforms to the coefficient block in order to generate a residual block associated with the TU. For example, inverse transform processing unit 156 may apply an inverse DCT, an inverse integer transform, an inverse Karhunen-Loeve transform (KLT), an inverse rotational transform, an inverse directional transform, or another inverse transform to the coefficient block.

If a PU is encoded using intra prediction, intra-prediction processing unit 166 may perform intra prediction to generate predictive blocks of the PU. Intra-prediction processing unit 166 may use an intra prediction mode to generate the predictive blocks of the PU based on samples spatially-neighboring blocks. Intra-prediction processing unit 166 may determine the intra prediction mode for the PU based on one or more syntax elements obtained from the bitstream.

If a PU is encoded using inter prediction, entropy decoding unit 150 may determine motion information for the PU. Motion compensation unit 164 may determine, based on the motion information of the PU, one or more reference blocks. Motion compensation unit 164 may generate, based on the one or more reference blocks, predictive blocks for the PU.

Reconstruction unit 158 may use transform blocks for TUs of a CU and the predictive blocks of the PUs of the CU, i.e., either intra-prediction data or inter-prediction data, as applicable, to reconstruct the coding blocks for the CU. For example, reconstruction unit 158 may add samples of the transform blocks to corresponding samples of the predictive blocks to reconstruct the coding blocks of the CU.

Filter unit 160 may perform a deblocking operation to reduce blocking artifacts associated with the coding blocks of the CU. Video decoder 30 may store the coding blocks of the CU in decoded picture buffer 162. Decoded picture buffer 162 may provide reference pictures for subsequent motion compensation, intra prediction, and presentation on a display device, such as display device 32 of FIG. 1. For instance, video decoder 30 may perform, based on the blocks in decoded picture buffer 162, intra prediction or inter prediction operations for PUs of other CUs.

In the example of FIG. 6, a computer readable medium 148 comprises a computer readable storage medium such as a memory, optical disc, magnetic disk, or other type of non-transitory storage medium from which a computing device is able to read data. In some examples where computer readable medium 148 comprises a computer readable storage medium, the computer readable storage medium may form part of a device, such as source device 12 (FIG. 1), file generation device 34 (FIG. 1), a content delivery network device, or another type of device. In some examples, computer readable medium 148 comprises a computer-readable communication medium, such as an optical fiber, communication cable, electro-magnetic wave, or other types of media from which a computing device is able to read data.

Furthermore, in the example of FIG. 6, a file processing unit 149 receives a file or portions of a file from computer readable medium 148. File processing unit 149 may be implemented by one or more processors or processing circuits of a device, such as destination device 14, a MANE, a content delivery network device, or another type of device.

File processing unit 149 may process the file. For instance, file processing unit 149 may obtain NAL units from the file. In the example of FIG. 6, the encoded video bitstream received by video decoder 30 may comprise NAL units obtained from the file.

In accordance with a technique of this disclosure, file processing unit 149 may obtain, from a file storing a multi-layer bitstream comprising a sequence of bits that forms a representation of pictures of the video data, a track box that contains metadata for a track. As part of obtaining the track box, file processing unit 149 may obtain, from the track box, a sample description box containing a sample group description entry. Furthermore, as part of obtaining the track box, file processing unit 149 may obtain, from the track box, a sample-to-group box for the track, the sample-to-group box mapping samples of the track into a sample group. The sample group may comprise samples sharing a property specified by the sample group description entry. Furthermore, file processing unit 149 may determine, based on a syntax element in the sample-to-group box, target layers among layers present in the track. Each of the target layers containing at least one picture belonging to a particular picture type. The sample group is one of: a TSA sample group and the particular picture type is a temporal sub-layer access picture type, or a STSA sample group and the particular picture type is a step-wise temporal sub-layer access picture type. File processing unit 149 may identify a sample in the TSA or STSA sample group as being appropriate for temporal sub-layer up-switching to a particular temporal sub-layer based on the target layers including a layer containing coded pictures of a particular temporal sub-layer. File processing unit 149 may extract encoded video data from the identified sample and provide the extracted video data to video decoder 30, thereby enabling temporal sub-layer up-switching.

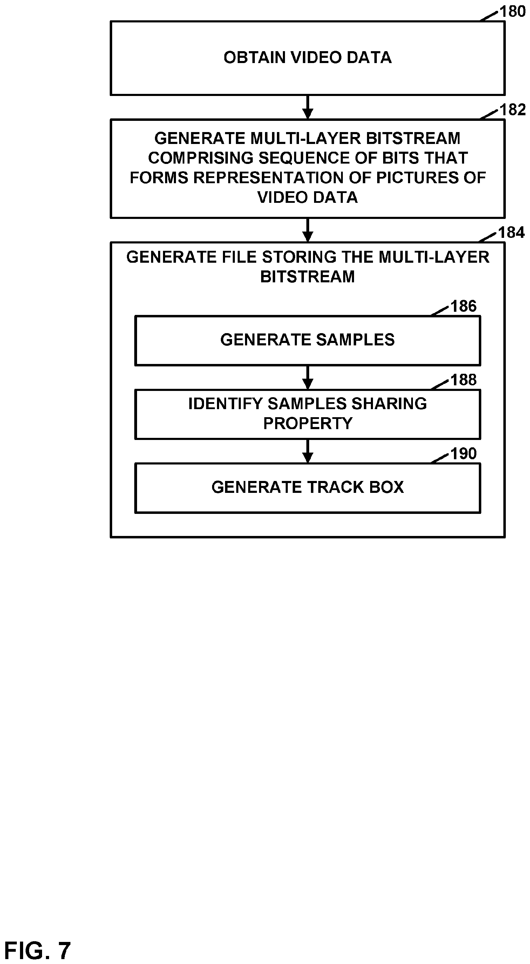

FIG. 7 is a flowchart illustrating an example operation, in accordance with a technique of this disclosure. The flowcharts of this disclosure are provided as examples. In other examples, more, fewer, or different actions are performed or actions are performed in different orders or in parallel.

In the example of FIG. 7, video source 18 of source device 12 may obtain video data (180). For example, as described elsewhere in this disclosure, video source 18 may comprise one or more cameras that obtain the video data from detected light. The video data may comprise a sequence of pictures. Furthermore, in the example of FIG. 7, video encoder 20 of source device 12 may generate a multi-layer bitstream that comprises a sequence of bits that forms a representation of pictures of the video data (182). For example, video encoder 20 may generate the multi-layer bitstream according to the L-HEVC codec, as described elsewhere in this disclosure.

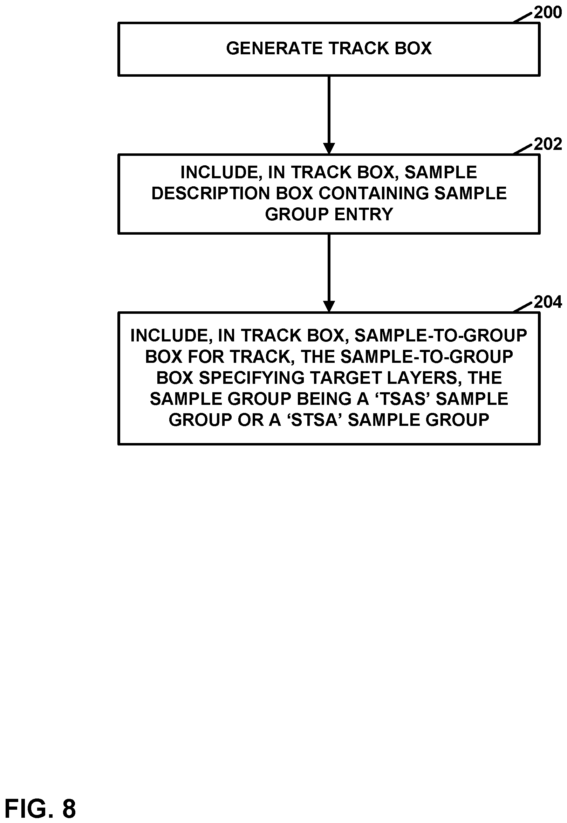

Subsequently, a device may generate a file that stores the multi-layer bitstream (184). Storing a file may comprise storing data representing the file to a data storage medium. In some examples, a unit within source device 12 (FIG. 1) generates the file. In some examples, a separate device, such as file generation device 34 (FIG. 1), generate the file. In some examples, file processing unit 128 (FIG. 5) generates the file. In the example of FIG. 7, as part of generating the file, the device may generate samples (186). In general, generating a sample may comprise storing data representing the sample. The samples may include NAL units of one or more coded pictures of the same access unit of the multi-layer bitstream. Generating a sample may comprise generating a box that contains a set of the NAL units. Furthermore, as part of generating the file, the device may identify samples sharing a property (188). For example, the device may identify samples that include TSA pictures or STSA pictures. Additionally, in the example of FIG. 7, the device may generate a track box (190). FIG. 8, described below, provides an example operation in which a device generates a track box. As described below, the device may generate a sample-to-group box mapping samples of a track into a sample group, where the sample group comprises samples sharing the property.

FIG. 8 is a flowchart illustrating an example operation of processing video data in which a track box is generated in accordance with a technique of this disclosure. The example of FIG. 8 is consistent with the second technique of this disclosure described above.

In the example of FIG. 8, a device (e.g., source device 12 (FIG. 1), file generation device 34 (FIG. 1), file processing unit 128 (FIG. 4), or another device or unit) generates, in a file for storage of a multi-layer bitstream, a track box that encloses metadata for a track (200). In general, generating a box may comprise storing data representing the box. The track contains media content. The media content of the track may comprise or consist of a sequence of samples. Each sample of the sequence of samples may correspond to an access unit. As part of generating the track box, the device may include, in the track box, a sample description box containing a sample group description entry (202). Including the sample description box in the track box may comprise storing data to a data storage medium such that the stored data is interpreted as part of the track box. The device may also include, in the track box, a sample-to-group box for the track (204). Including the sample-to-group box in the track box may comprise storing data to a data storage medium such that the stored data is interpreted as part of the track box. The sample-to-group box maps samples of the track into a sample group. The sample group comprises samples sharing a property specified by the sample group description entry. The sample-to-group box specifies target layers among layers present in the track. For instance, the sample-to-group box may include a syntax element specifying target layers among layers present in the track. Each of the target layers contains at least one picture belonging to a particular picture type. In some instances, the sample group is a 'tsas' sample group and the particular picture type is a temporal sub-layer access picture type. In some instances, the sample group is a 'stsa' sample group and the particular picture type is a step-wise temporal sub-layer access picture type.

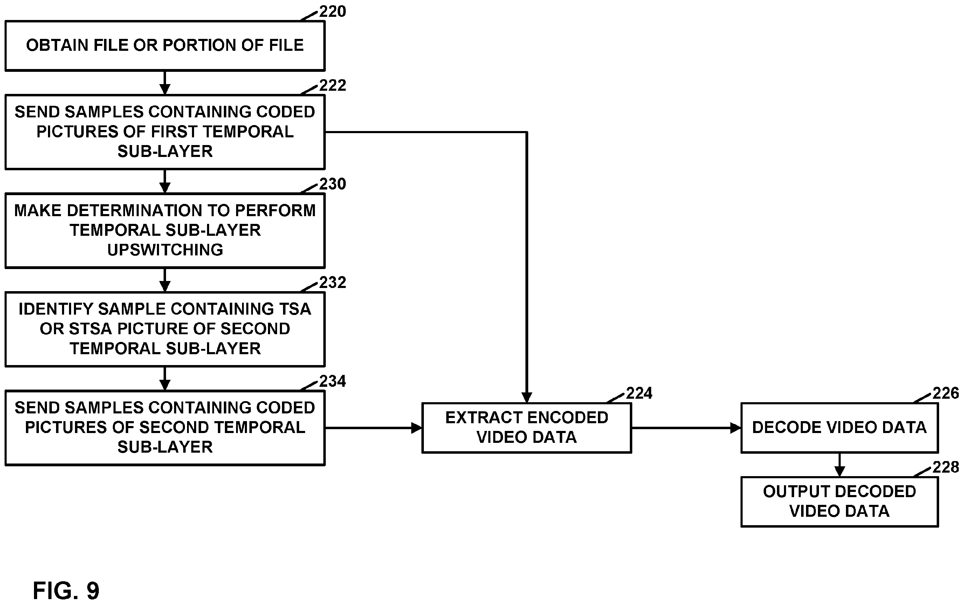

FIG. 9 is a flowchart illustrating an example operation, in accordance with a technique of this disclosure. In the example of FIG. 9, a device, such as destination device 14 (FIG. 1) or a device that implements file processing unit 149 (FIG. 6), may obtain a file or a portion of a file (220). For example, the device may download the file or receive a stream of portions of the file. In some examples, the device may obtain the file from local storage.

Additionally, in the example of FIG. 9, the device may send to a file extraction unit samples of the file containing a first temporal sub-layer of a multi-layer bitstream encapsulated by the file (222). In some examples, the device may send samples via one or more communication media. In some examples, samples may be sent via an internal interconnect, or stored to a particular location in a computer-readable storage medium. Furthermore, as shown in the example of FIG. 9, a file extraction unit may extract encoded video data from samples of the file, including the identified sample (224). In some examples, file processing unit 149 (FIG. 6) performs the role of the file extraction unit. Encoded video data may be extracted from the file by copying the encoded video data from the file. Video decoder 30 may decode encoded video data extracted from the file (226). Video decoder 30 may decode the encoded video data in the manner described elsewhere in this disclosure. Display device 32 of destination device 14 may output the decoded video data (228).

Furthermore, in the example of FIG. 9, the device may make a determination to perform temporal sub-layer up-switching to a second temporal sub-layer (230). The second temporal sub-layer may have a temporal identifier greater than a temporal identifier of the first temporal sub-layer. In some examples, the device may make the determination to perform temporal sub-layer up-switching in response to a request from destination device 14, video decoder 30, or another device or unit. In some examples, the device may make the determination to perform temporal sub-layer up-switching in response to other events, such as a detected increase in network throughput.

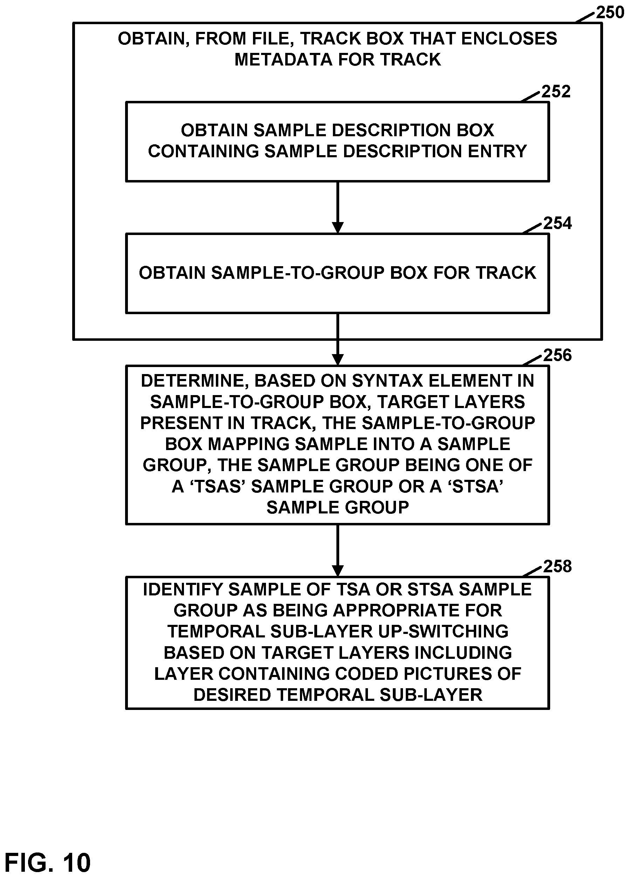

Responsive to making the determination to perform temporal sub-layer up-switching, the device may identify a sample of the file containing a TSA or STSA pictures of the second temporal sub-layer (232). An STSA picture is acceptable if the temporal identifier of the second temporal sub-layer is 1 greater than the temporal identifier of the first temporal sub-layer. As part of identifying the sample, the device may perform the process of FIG. 10. Thus, as described below with respect to FIG. 10, based on a target layer specified in a sample-to-group box for a TSA or STSA sample group being the particular temporal sub-layer, the device may determine that a particular sample includes a TSA or STSA picture of the second temporal sub-layer.

The device may send the identified sample, and potentially subsequent samples of a track to which the identified sample belongs, to the file extraction unit. Thus, the device may send samples of the file containing coded pictures of the second temporal sub-layer to the file extraction unit (234). The file extraction unit may extract encoded video data from samples of the file, including the identified sample (224). Video decoder 30 may decode encoded video data extracted from the file (226). Thus, when video decoder 30 receives the encoded video data of the identified sample, video decoder 30 may start decoding encoded video data of the particular temporal sub-layer. In this way, video decoder 30 may perform temporal sub-layer up-switching. Display device 32 of destination device 14 may output the decoded video data (228).

FIG. 10 is a flowchart illustrating an example operation of a device for processing video data, in accordance with a technique of this disclosure. The operation of FIG. 10 may be performed by various devices, such as destination device 14 (FIG. 1), a MANE, a file server, a streaming server, or another type of device.

In the example of FIG. 10, the device obtains, from the file, a track box that encloses metadata for a track (250). The track may contain media content. The media content of the track may comprise a sequence of samples. Each sample of the sequence of samples may correspond to an access unit.

Furthermore, in the example of FIG. 10, as part of obtaining the track box, the device may obtain, from the track box, a sample description box containing a sample group description entry (252). For instance, the device may read the sample description box in the file. Furthermore, as part of obtaining the track box, the device may obtain, from the track box, a sample-to-group box for the track (254). For instance, the device may read the sample-to-group box in the file. The sample-to-group box may map samples of the track into a sample group. The sample group may comprise samples sharing a property specified by the sample group description entry.

In the example of FIG. 10, the device may determine, based on a syntax element (e.g., a target layers syntax element) in the sample-to-group box, target layers among layers present in the track (256). Each of the target layers may contain at least one picture belonging to a particular picture type. The sample group may be one of: a 'tsas' sample group and the particular picture type is a temporal sub-layer access picture type, or a 'stsa' sample group and the particular picture type is a step-wise temporal sub-layer access picture type.

Furthermore, the device may identify a sample in the TSA or STSA sample group as being appropriate for temporal sub-layer up-switching to a particular temporal sub-layer based on the target layers including a layer containing coded pictures of a particular temporal sub-layer (258). The particular temporal sub-layer may be the second temporal sub-layer mentioned above with respect to FIG. 9. Thus, the particular temporal sub-layer is a temporal sub-layer to which up-switching is to occur. Assuming coded pictures of the particular temporal sub-layer belong to a particular layer, a sample may be appropriate for temporal sub-layer up-switching to the particular temporal sub-layer if the sample includes a TSA or STSA picture that belongs to the particular layer. For example, if coded pictures of the particular temporal sub-layer are in layer 2 and the target layers indicated by the TSA or STSA sample groups of a given track include layer 2, the device may identify a sample of the TSA or STSA sample groups of the given track as being appropriate for temporal sub-layer up-switching to the particular temporal sub-layer.

It should be understood that all of the techniques described herein may be used individually or in combination. It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially. In addition, while certain aspects of this disclosure are described as being performed by a single module or unit for purposes of clarity, it should be understood that the techniques of this disclosure may be performed by a combination of units or modules associated with a video coder.

Certain aspects of this disclosure have been described with respect to the HEVC standard for purposes of illustration. However, the techniques described in this disclosure may be useful for other video coding processes, including other standard or proprietary video coding processes not yet developed.

The techniques described above may be performed by source device 12, destination device 14, file generation device 34, or other device. Video encoder 20 and video decoder 30 may be generally referred to as a video coder. Likewise, video coding may refer to video encoding or video decoding, as applicable.

While particular combinations of various aspects of the techniques are described above, these combinations are provided merely to illustrate examples of the techniques described in this disclosure. Accordingly, the techniques of this disclosure should not be limited to these example combinations and may encompass any conceivable combination of the various aspects of the techniques described in this disclosure.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium. Processors may be coupled to a data storage medium in various ways. For example, a processor may be coupled to a data storage medium via an internal device interconnect, a wired or wireless network connection, or another communication medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Functionality described in this disclosure may be performed by fixed function and/or programmable processing circuitry. For instance, instructions may be executed by fixed function and/or programmable processing circuitry. Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements. Processing circuits may be coupled to other components in various ways. For example, a processing circuit may be coupled to other components via an internal device interconnect, a wired or wireless network connection, or another communication medium.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

1. A method of processing multi-layer video data using an ISO base media file format, ISOBMFF, or a file format based on an ISOBMFF, the method comprising:
generating (200), in a file storing a multi-layer bitstream comprising a sequence of bits that forms a representation of pictures of the video data, a track box that contains metadata for a track, the track containing media content, the media content of the track comprising a sequence of samples, wherein generating the track box comprises:
generating (202), in the track box, a sample description box containing a sample group description entry; and
generating (204), in the track box, a sample-to-group box for the track,
the sample-to-group box mapping samples of the track into a sample group, the sample group comprising samples sharing a property specified by the sample group description entry,
the sample-to-group box specifying target layers among layers present in the track based on a version of the sample group description box and the sample-to-group box being equal to 1, the sample-to-group box specifying the target layers by using a grouping type parameter that specifies a target layers value that specifies the indicated target layers among all the layers present in the track containing the sample group and all layers referred to, directly and indirectly, by the layers that are present in the track containing the sample group,
each of the target layers containing at least one picture belonging to a particular picture type, and
the sample group is one of:
a temporal sub-layer access (TSA) sample group and the particular picture type is a temporal sub-layer access picture type, or
a stepwise temporal sub-layer access (STSA) sample group and the particular picture type is a step-wise temporal sub-layer access picture type.

2. The method of claim 1, wherein generating (204) the sample-to-group box comprises:
including, in the sample-to-group box, a syntax element, specifying semantics of the target layers value.

3. The method of claim 1,
wherein the sample group is applicable to an operation point,
the method further comprising signaling, based on the track containing samples of a highest layer of the operation point, the sample group in the track.

4. A method of processing multi-layer video data using an ISO base media file format, ISOBMFF, or a file format based on an ISOBMFF, the method comprising:
obtaining (250), from a file storing a multi-layer bitstream comprising a sequence of bits that forms a representation of pictures of the video data, a track box that contains metadata for a track, the track containing media content, the media content of the track comprising a sequence of samples, wherein obtaining the track box comprises:
obtaining (252), from the track box, a sample description box containing a sample group description entry; and
obtaining (254), from the track box, a sample-to-group box for the track, the sample-to-group box mapping samples of the track into a sample group, the sample group comprising samples sharing a property specified by the sample group description entry;
determining (256), based on a version of the sample group description box and the sample-to-group box being equal to 1, target layers among layers present in the track, the sample-to-group box specifying the target layers by using a grouping type parameter that specifies a target layers value that specifies the indicated target layers among all the layers present in the track containing the sample group and all layers referred to, directly and indirectly, by the layers that are present in the track containing the sample group,
each of the target layers containing at least one picture belonging to a particular picture type, and
the sample group is one of:
a temporal sub-layer access (TSA) sample group and the particular picture type is a temporal sub-layer access picture type, or
a stepwise temporal sub-layer (STSA) sample group and the particular picture type is a step-wise temporal sub-layer access picture type; and
identifying (258) a sample in the TSA or STSA sample group as being appropriate for temporal sub-layer up-switching to a particular temporal sub-layer based on the target layers including a layer containing coded pictures of the particular temporal sub-layer.

5. The method of claim 4, wherein obtaining (254) the sample-to-group box comprises:
obtaining, from the sample-to-group box, a syntax element specifying semantics of the target layers value; and
interpreting the target layers value according to the semantics specified by the syntax element to determine the target layers.

6. The method of claim 4,
wherein the sample group is applicable to an operation point, and
the method further comprises determining, based on the track containing samples of a highest layer of an operation point, that the track includes the sample group.

7. A device (12, 34) for processing multi-layer video data using an ISO base media file format, ISOBMFF, or a file format based on an ISOBMFF, the device comprising:
one or more processing circuits configured to:
generate, in a file storing a multi-layer bitstream comprising a sequence of bits that forms a representation of pictures of the video data, a track box that contains metadata for a track, the track containing media content, the media content of the track comprising a sequence of samples, wherein the one or more processing circuits are configured such that, as part of generating the track box, the one or more processing circuits:
generate, in the track box, a sample description box containing a sample group description entry; and
generate, in the track box, a sample-to-group box for the track,
the sample-to-group box mapping samples of the track into a sample group, the sample group comprising samples sharing a property specified by the sample group description entry,
the sample-to-group box specifying target layers among layers present in the track based on a version of the sample group description box and the sample-to-group box being equal to 1, the sample-to-group box specifying the target layers by using a grouping type parameter that specifies a target layers value that specifies the indicated target layers among all the layers present in the track containing the sample group and all layers referred to, directly and indirectly, by the layers that are present in the track containing the sample group,
each of the target layers containing at least one picture belonging to a particular picture type, and
the sample group being one of:
a temporal sub-layer access (TSA) sample group and the particular picture type is a temporal sub-layer access picture type, or
a stepwise temporal sub-layer access (STSA) sample group and the particular picture type is a step-wise temporal sub-layer access picture type; and
a data storage medium coupled to the one or more processing circuits, the data storage medium configured to store the file.

8. The device (12, 34) of claim 7, wherein the one or more processing circuits are configured such that, as part of generating the sample-to-group box in the track box, the one or more processing circuits:
include, in the sample-to-group box a syntax element specifying semantics of the target layers value.

9. The device (12, 34) of claim 7,
wherein the sample group is applicable to an operation point, and
the one or more processing circuits are configured to signal, based on the track containing samples of a highest layer of the operation point, the sample group in the track.

10. A device (14) for processing multi-layer video data using an ISO base media file format, ISOBMFF, or a file format based on an ISOBMFF, the device comprising:
a data storage medium configured to store a file storing a multi-layer bitstream comprising a sequence of bits that forms a representation of pictures of the video data; and
one or more processing circuits coupled to the data storage medium, the one or more processing circuits configured to:
obtain, from the file, a track box that contains metadata for a track, the track containing media content, the media content of the track comprising a sequence of samples, wherein the one or more processing circuits are configured such that, as part of obtaining the track box, the one or more processing circuits:
obtain, from the track box, a sample description box containing a sample group description entry; and
obtain, from the track box, a sample-to-group box for the track, the sample-to-group box mapping samples of the track into a sample group, the sample group comprising samples sharing a property specified by the sample group description entry;
determine, based on a version of the sample group description box and the sample-to-group box being equal to 1, target layers among layers present in the track, the sample-to-group box specifying the target layers by using a grouping type parameter that specifies a target layers value that specifies the indicated target layers among all the layers present in the track containing the sample group and all layers referred to, directly and indirectly, by the layers that are present in the track containing the sample group,
each of the target layers containing at least one picture belonging to a particular picture type, and
the sample group is one of:
a temporal sub-layer access (TSA) sample group and the particular picture type is a temporal sub-layer access picture type, or
a stepwise temporal sub-layer access (STSA) sample group and the particular picture type is a step-wise temporal sub-layer access picture type; and
identify a sample in the TSA or STSA sample group as being appropriate for temporal sub-layer up-switching to a particular temporal sub-layer based on the target layers including a layer containing coded pictures of the particular temporal sub-layer.

11. The device (14) of claim 10, wherein the one or more processing circuits are configured to:
obtain, from the sample-to-group box, a syntax element specifying semantics of the target layers value; and
interpret the target layers value according to the semantics specified by the syntax element to determine the target layers.

12. The device (14) of claim 10,
wherein the sample group is applicable to an operation point, and
the one or more processing circuits are further configured to determine, based on the track containing samples of a highest layer of an operation point, that the track includes the sample group.

13. The device (14) of any of claims 10 to 12, further comprising a display device for displaying decoded video data.

14. The device (14) of any of claim 10 to 13, wherein the device (14) is a mobile computing device.

15. A computer-readable storage medium having instructions stored thereon that, when executed, cause a device for processing video data to perform the method of any of claims 1 to 6.

## Patentansprüche

1. Verfahren zum Verarbeiten mehrschichtiger Videodaten mit einem ISO-Basismedien-Dateiformat ISOBMFF oder einem Dateiformat auf der Basis eines ISOBMFF, wobei das Verfahren Folgendes beinhaltet:
Erzeugen (200) in einer Datei, die einen mehrschichtigen Bitstrom speichert, der eine Folge von Bits umfasst, die eine Darstellung von Bildern der Videodaten bildet, einer Trackbox, die Metadaten für einen Track enthält, wobei der Track Medieninhalt enthält, wobei der Medieninhalt des Track eine Folge von Samples umfasst, wobei das Erzeugen der Trackbox Folgendes beinhaltet:
Erzeugen (202), in der Trackbox, einer Sample-Beschreibungsbox, die einen Sample-Gruppen-Beschreibungseintrag enthält; und
Erzeugen (204), in der Trackbox, einer Sample-to-Group-Box für den Track,
wobei die Sample-to-Group-Box Samples des Track in eine Sample-Gruppe abbildet, wobei die Sample-Gruppe Samples umfasst, die eine durch den Sample-Gruppen-Beschreibungseintrag vorgegebene Eigenschaft gemeinsam haben,
wobei die Sample-to-Group-Box Zielschichten unter im Track vorhandenen Schichten auf der Basis davon vorgibt, dass eine Version der Sample-Gruppen-Beschreibungsbox und der Sample-to-Group-Box gleich 1 ist, wobei die Sample-to-Group-Box die Zielschichten anhand eines Gruppierungstypparameters vorgibt, der einen Zielschichtwert vorgibt, der die angezeigten Zielschichten unter allen im Track vorhandenen Schichten vorgibt, die die Sample-Gruppe und alle Schichten enthält, auf die direkt und indirekt durch die Schichten verwiesen wird, die in dem die Sample-Gruppe enthaltenden Track vorhanden sind,
wobei jede der Zielschichten mindestens ein Bild enthält, das zu einem bestimmten Bildtyp gehört, und
die Sample-Gruppe eine der Folgenden ist:
eine TSA-(Temporal Sub-Layer Access)-Sample-Gruppe, und der bestimmte Bildtyp ist ein TSA-Bildtyp, oder
eine STSA-(Stepwise Temporal Sub-Layer Access)-Sample-Gruppe, und der jeweilige Bildtyp ist ein STSA-Bildtyp.

2. Verfahren nach Anspruch 1, wobei das Erzeugen (204) der Sample-to-Group-Box Folgendes beinhaltet: Einschließen eines Syntaxelements in die Sample-to-Group-Box, das Semantik des Zielschichtwerts vorgibt.

3. Verfahren nach Anspruch 1,
wobei die Sample-Gruppe auf einen Betriebspunkt anwendbar ist,
wobei das Verfahren ferner das Signalisieren der Sample-Gruppe im Track auf der Basis davon beinhaltet, dass der Track Samples einer höchsten Schicht des Betriebspunkts enthält.

4. Verfahren zum Verarbeiten mehrschichtiger Videodaten mit einem ISO-Basismedien-Dateiformat ISOBMFF oder einem Dateiformat auf der Basis eines ISOBMFF, wobei das Verfahren Folgendes beinhaltet:
Einholen (250) einer Trackbox, die Metadaten für einen Track enthält, aus einer Datei, die einen mehrschichtigen Bitstrom speichert, der eine Folge von Bits umfasst, die eine Darstellung von Bildern der Videodaten bildet, wobei der Track Medieninhalt enthält, wobei der Medieninhalt des Track eine Folge von Samples umfasst, wobei das Einholen der Trackbox Folgendes beinhaltet:
Einholen (252), aus der Trackbox, einer Sample-Beschreibungsbox, die einen Sample-Gruppen-Beschreibungseintrag enthält; und
Einholen (254), aus der Trackbox, einer Sample-to-Group-Box für den Track, wobei die Sample-to-Group-Box Samples des Track in eine Sample-Gruppe abbildet, wobei die Sample-Gruppe Samples umfasst, die eine durch den Sample-Gruppen-Beschreibungseintrag vorgegebene Eigenschaft gemeinsam haben;
Bestimmen (256), auf der Basis davon, dass eine Version der Sample-Gruppen-Beschreibungsbox und der Sample-to-Group-Box gleich 1 ist, von Zielschichten unter in dem Track vorhandenen Schichten, wobei die Sample-to-Group-Box die Zielschichten anhand eines Gruppierungstypparameters vorgibt, der einen Zielschichtwert vorgibt, der die angezeigten Zielschichten unter allen in dem Track vorhandenen Schichten vorgibt, die die Sample-Gruppe enthalten, und allen Schichten, auf die direkt und indirekt durch die Schichten verwiesen wird, die in dem die Sample-Gruppe enthaltenden Track vorhanden sind,
wobei jede der Zielschichten mindestens ein Bild enthält, das zu einem bestimmten Bildtyp gehört, und
die Sample-Gruppe eine der Folgenden ist:
eine TSA-(Temporal Sub-Layer Access)-Sample-Gruppe, und der bestimmte Bildtyp ist ein TSA-Bildtyp, oder
eine STSA-(Stepwise Temporal Sub-Layer Access)-Sample-Gruppe, und der jeweilige Bildtyp ist ein STSA-Bildtyp; und
Identifizieren (258) eines Sample in der TSA- oder STSA-Sample-Gruppe als geeignet für zeitliches Subschicht-Aufwärtsschalten zu einer bestimmten zeitlichen Subschicht auf der Basis davon, dass die Zielschichten eine Schicht beinhalten, die codierte Bilder der bestimmten zeitlichen Subschicht enthält.

5. Verfahren nach Anspruch 4, wobei das Einholen (254) der Sample-to-Group-Box Folgendes beinhaltet:
Einholen eines Syntaxelements aus der Sample-to-Group-Box, das Semantik des Zielschichtwertes vorgibt; und
Interpretieren des Zielschichtwertes gemäß der durch das Syntaxelement vorgegebenen Semantik zum Bestimmen der Zielschichten.

6. Verfahren nach Anspruch 4,
wobei die Sample-Gruppe auf einen Betriebspunkt anwendbar ist, und
wobei das Verfahren ferner das Bestimmen, auf der Basis davon, dass der Track Samples einer höchsten Schicht eines Betriebspunktes enthält, beinhaltet, dass der Track die Sample-Gruppe beinhaltet.

7. Gerät (12, 34) zum Verarbeiten mehrschichtiger Videodaten mit einem ISO-Basismedien-Dateiformat ISOBMFF oder einem Dateiformat auf der Basis eines ISOBMFF, wobei das Gerät Folgendes umfasst:
eine oder mehrere Verarbeitungsschaltungen, konfiguriert zum:
Erzeugen in einer Datei, die einen mehrschichtigen Bitstrom speichert, der eine Folge von Bits umfasst, die eine Darstellung von Bildern der Videodaten bildet, einer Trackbox, die Metadaten für einen Track enthält, wobei der Track Medieninhalt enthält, wobei der Medieninhalt des Track eine Folge von Samples umfasst, wobei die ein oder mehreren Verarbeitungsschaltungen so konfiguriert sind, dass die ein oder mehreren Verarbeitungsschaltungen im Rahmen des Erzeugens der Trackbox Folgendes durchführen:
Erzeugen, in der Trackbox, einer Sample-Beschreibungsbox, die einen Sample-Gruppen-Beschreibungseintrag enthält; und
Erzeugen, in der Trackbox, einer Sample-to-Group-Box für den Track,
wobei die Sample-to-Group-Box Samples des Track in eine Sample-Gruppe abbildet, wobei die Sample-Gruppe Samples umfasst, die eine durch den Sample-Gruppen-Beschreibungseintrag vorgegebene Eigenschaft gemeinsam haben,
wobei die Sample-to-Group-Box Zielschichten unter im Track vorhandenen Schichten auf der Basis davon vorgibt, dass eine Version der Sample-Gruppen-Beschreibungsbox und die Sample-to-Group-Box gleich 1 ist, wobei die Sample-to-Group-Box die Zielschichten anhand eines Gruppierungstypparameters vorgibt, der einen Zielschichtwert vorgibt, der die angezeigten Zielschichten unter allen im Track vorhandenen Schichten spezifiziert, die die Sample-Gruppe und alle Schichten enthält, auf die direkt und indirekt durch die Schichten verwiesen wird, die in dem die Sample-Gruppe enthaltenden Track vorhanden sind,
wobei jede der Zielschichten mindestens ein Bild enthält, das zu einem bestimmten Bildtyp gehört, und
die Sample-Gruppe eine der Folgenden ist:
eine TSA-(Temporal Sub-Layer Access)-Sample-Gruppe, und der bestimmte Bildtyp ist ein TSA-Bildtyp, oder
eine STSA-(Stepwise Temporal Sub-Layer Access)-Sample-Gruppe, und der jeweilige Bildtyp ist ein STSA-Bildtyp; und
ein Datenspeichermedium, das mit den ein oder mehreren Verarbeitungsschaltungen gekoppelt ist, wobei das Datenspeichermedium zum Speichern der Datei konfiguriert ist.

8. Gerät (12, 34) nach Anspruch 7, wobei die ein oder mehreren Verarbeitungsschaltungen so konfiguriert sind, dass die ein oder mehreren Verarbeitungsschaltungen im Rahmen der Erzeugung der Sample-to-Group-Box in der Trackbox:
ein Syntaxelement in die Sample-to-Group-Box einschließen, das Semantik des Zielschichtwerts vorgibt.

9. Gerät (12, 34) nach Anspruch 7,
wobei die Sample-Gruppe auf einen Betriebspunkt anwendbar ist, und
die ein oder mehreren Verarbeitungsschaltungen zum Signalisieren, auf der Basis davon, dass der Track Samples einer höchsten Schicht des Betriebspunkts enthält, der Sample-Gruppe in dem Track konfiguriert sind.

10. Gerät (14) zur Verarbeitung mehrschichtiger Videodaten mit einem ISO-Basismedien-Dateiformat ISOBMFF oder einem Dateiformat auf der Basis eines ISOBMFF, wobei das Gerät Folgendes umfasst:
ein Datenspeichermedium, das zum Speichern einer Datei konfiguriert ist, die einen mehrschichtigen Bitstrom speichert, der eine Folge von Bits umfasst, die eine Darstellung von Bildern der Videodaten bildet; und
eine oder mehrere mit dem Datenspeichermedium gekoppelte Verarbeitungsschaltungen, wobei die ein oder mehreren Verarbeitungsschaltungen konfiguriert sind zum:
Einholen einer Trackbox, die Metadaten für einen Track enthält, aus der Datei, wobei der Medieninhalt des Track eine Folge von Samples umfasst, wobei die ein oder mehreren Verarbeitungsschaltungen so konfiguriert sind, dass die ein oder mehreren Verarbeitungsschaltungen im Rahmen des Einholens der Trackbox Folgendes durchführen:
Einholen, aus der Trackbox, einer Sample-Beschreibungsbox, die einen Sample-Gruppen-Beschreibungseintrag enthält; und
Einholen einer Sample-to-Group-Box für den Track aus der Trackbox, wobei die Sample-to-Group-Box Samples des Track in eine Sample-Gruppe abbildet, wobei die Sample-Gruppe Samples umfasst, die eine durch den Sample-Gruppen-Beschreibungseintrag vorgegebene Eigenschaft gemeinsam haben;
Bestimmen, auf der Basis davon, dass eine Version der Sample-Gruppen-Beschreibungsbox und der Sample-to-Group-Box gleich 1 ist, von Zielschichten unter in dem Track vorhandenen Schichten, wobei die Sample-to-Group-Box die Zielschichten anhand eines Gruppierungstypparameters vorgibt, der einen Zielschichtwert vorgibt, der die angezeigten Zielschichten unter allen in dem Track vorhandenen Schichten, die die Sample-Gruppe enthalten, und allen Schichten vorgibt, auf die direkt und indirekt durch die Schichten verwiesen wird, die in dem die Sample-Gruppe enthaltenden Track vorhanden sind,
wobei jede der Zielschichten mindestens ein Bild enthält, das zu einem bestimmten Bildtyp gehört, und
die Sample-Gruppe eine der Folgenden ist:
eine TSA-(Temporal Sub-Layer Access)-Sample-Gruppe, und der bestimmte Bildtyp ist ein TSA-Bildtyp, oder
eine STSA-(Stepwise Temporal Sub-Layer Access)-Sample-Gruppe, und der jeweilige Bildtyp ist ein STSA-Bildtyp; und
Identifizieren eines Sample in der TSA- oder STSA-Sample-Gruppe als geeignet für zeitliches Subschicht-Aufwärtsschalten zu einer bestimmten zeitlichen Subschicht auf der Basis davon, dass die Zielschichten eine Schicht beinhalten, die codierte Bilder der bestimmten zeitlichen Subschicht enthält.

11. Gerät (14) nach Anspruch 10, wobei die ein oder mehreren Verarbeitungsschaltungen konfiguriert sind zum:
Einholen eines Syntaxelements aus der Sample-to-Group-Box, das Semantik des Zielschichtwerts vorgibt; und
Interpretieren des Zielschichtwerts gemäß der durch das Syntaxelement vorgegebenen Semantik zum Bestimmen der Zielschichten.

12. Gerät (14) nach Anspruch 10,
wobei die Sample-Gruppe auf einen Betriebspunkt anwendbar ist, und
die ein oder mehreren Verarbeitungsschaltungen ferner konfiguriert sind zum Bestimmen, auf der Basis davon, dass der Track Samples einer höchsten Schicht eines Betriebspunktes enthält, dass der Track die Sample-Gruppe enthält.

13. Gerät (14) nach einem der Ansprüche 10 bis 12, das ferner ein Anzeigegerät zum Anzeigen decodierter Videodaten umfasst.

14. Gerät (14) nach einem der Ansprüche 10 bis 13, wobei das Gerät (14) ein mobiles Computergerät ist.

15. Computerlesbares Speichermedium, auf dem Befehle gespeichert sind, die bei Ausführung bewirken, dass ein Gerät zur Verarbeitung von Videodaten das Verfahren nach einem der Ansprüche 1 bis 6 durchführt.

## Revendications

1. Procédé de traitement de données vidéo multicouches utilisant un format de fichier multimédia de base ISO, ISOBMFF, ou un format de fichier basé sur ISOBMFF, le procédé comprenant :
la génération (200), dans un fichier mémorisant un train binaire multicouche comprenant une séquence de bits qui forme une représentation d'images des données vidéo, d'une boîte de piste qui contient des métadonnées pour une piste, la piste contenant un contenu multimédia, le contenu multimédia de la piste comprenant une séquence d'échantillons, la génération de la boîte de piste comprenant :
la génération (202), dans la boîte de piste, d'une boîte de description d'échantillons contenant une entrée de description de groupe d'échantillons ; et
la génération (204), dans la boîte de piste, d'une boîte d'échantillons en groupe pour la piste,
la boîte d'échantillons en groupe mappant des échantillons de la piste sur un groupe d'échantillons, le groupe d'échantillons comprenant des échantillons partageant une propriété spécifiée par l'entrée de description de groupe d'échantillons,
la boîte d'échantillons en groupe spécifiant des couches cibles parmi les couches présentes dans la piste sur la base d'une version de la boîte de description de groupes d'échantillons et de la boîte d'échantillons en groupe égale à 1, la boîte d'échantillons en groupe spécifiant les couches cibles à l'aide d'un paramètre de type de groupement qui spécifie une valeur de couches cibles qui spécifie les couches cibles indiquées parmi toutes les couches présentes dans la piste contenant le groupe d'échantillons et toutes les couches auxquelles font référence, directement et indirectement, les couches qui sont présentes dans la piste contenant le groupe d'échantillons,
chacune des couches cible contenant au moins une image appartenant à un type d'image particulier, et
le groupe d'échantillons est l'un :
d'un groupe d'échantillons d'accès à une sous-couche temporelle (TSA) et le type d'image particulier est un type d'image d'accès à une sous-couche temporelle, ou
d'un groupe d'échantillons d'accès par étapes à une sous-couche temporelle (STSA) et le type d'image particulier un type d'image d'accès par étapes à une sous-couche temporelle.

2. Procédé selon la revendication 1, dans lequel la génération (204) de la boîte d'échantillons en groupe comprend :
l'inclusion, dans la boîte d'échantillons en groupe, d'un élément syntaxique, spécifiant une sémantique de la valeur de couches cibles.

3. Procédé selon la revendication 1,
dans lequel le groupe d'échantillons est applicable à un point d'opération,
le procédé comprenant en outre la signalisation, sur la base de la piste contenant des échantillons d'une couche la plus haute du point d'opération, du groupe d'échantillons dans la piste.

4. Procédé de traitement de données vidéo multicouches utilisant un format de fichier multimédia de base ISO, ISOBMFF, ou un format de fichier basé sur ISOBMFF, le procédé comprenant :
l'obtention (250), à partir d'un fichier mémorisant un train binaire multicouche comprenant une séquence de bits qui forme une représentation d'images des données vidéo, d'une boîte de piste qui contient des métadonnées pour une piste, la piste contenant un contenu multimédia, le contenu multimédia de la piste comprenant une séquence d'échantillons, l'obtention de la boîte de piste comprenant :
l'obtention (252), à partir de la boîte de piste, d'une boîte de description d'échantillons contenant une entrée de description de groupe d'échantillons ; et
l'obtention (254), à partir de la boîte de piste, d'une boîte d'échantillons en groupe pour la piste, la boîte d'échantillons en groupe mappant des échantillons de la piste sur un groupe d'échantillons, le groupe d'échantillons comprenant des échantillons partageant une propriété spécifiée par l'entrée de description de groupe d'échantillons ;
la détermination (256), sur la base d'une version de la boîte de description de groupes d'échantillons et de la boîte d'échantillons en groupe égale à 1, de couches cibles parmi des couches présentes dans la piste, la boîte d'échantillons en groupe spécifiant les couches cibles à l'aide d'un paramètre de type de groupement qui spécifie une valeur de couches cibles qui spécifie les couches cibles indiquées parmi toutes les couches présentes dans la piste contenant le groupe d'échantillons et toutes les couches auxquelles font référence, directement et indirectement, les couches qui sont présentes dans la piste contenant le groupe d'échantillons
chacune des couches cible contenant au moins une image appartenant à un type d'image particulier, et
le groupe d'échantillons est l'un :
d'un groupe d'échantillons d'accès à une sous-couche temporelle (TSA) et le type d'image particulier est un type d'image d'accès à une sous-couche temporelle, ou
d'un groupe d'échantillons d'accès par étapes à une sous-couche temporelle (STSA) et le type d'image particulier un type d'image d'accès par étapes à une sous-couche temporelle.

5. Procédé selon la revendication 4, dans lequel l'obtention (254) de la boîte d'échantillons en groupe comprend :
l'obtention, à partir de la boîte d'échantillons en groupe, d'un élément syntaxique spécifiant une sémantique de la valeur de couches cibles ; et
l'interprétation de la valeur de couches cibles conformément à la sémantique spécifiée par l'élément syntaxique pour déterminer les couches cibles.

6. Procédé selon la revendication 4,
dans lequel le groupe d'échantillons est applicable à un point d'opération, et
le procédé comprenant en outre la détermination, sur la base de la piste contenant des échantillons d'une couche la plus haute du point d'opération, que la piste comporte le groupe d'échantillons.

7. Dispositif (12, 34) de traitement de données vidéo multicouches utilisant un format de fichier multimédia de base ISO, ISOBMFF, ou un format de fichier basé sur ISOBMFF, le dispositif comprenant :
un ou plusieurs circuits de traitement configurés pour :
générer, dans un fichier mémorisant un train binaire multicouche comprenant une séquence de bits qui forme une représentation d'images des données vidéo, une boîte de piste qui contient des métadonnées pour une piste, la piste contenant un contenu multimédia, le contenu multimédia de la piste comprenant une séquence d'échantillons, dans lequel les un ou plusieurs circuits de traitement sont configurés de telle sorte que, dans le cadre de la génération de la boîte de piste, les un ou plusieurs circuits de traitement
génèrent (202), dans la boîte de piste, une boîte de description d'échantillons contenant une entrée de description de groupe d'échantillons ; et
génèrent (204), dans la boîte de piste, une boîte d'échantillons en groupe pour la piste,
la boîte d'échantillons en groupe mappant des échantillons de la piste sur un groupe d'échantillons, le groupe d'échantillons comprenant des échantillons partageant une propriété spécifiée par l'entrée de description de groupe d'échantillons,
la boîte d'échantillons en groupe spécifiant des couches cibles parmi les couches présentes dans la piste sur la base d'une version de la boîte de description de groupes d'échantillons et de la boîte d'échantillons en groupe égale à 1, la boîte d'échantillons en groupe spécifiant les couches cibles à l'aide d'un paramètre de type de groupement qui spécifie une valeur de couches cibles qui spécifie les couches cibles indiquées parmi toutes les couches présentes dans la piste contenant le groupe d'échantillons et toutes les couches auxquelles font référence, directement et indirectement, les couches qui sont présentes dans la piste contenant le groupe d'échantillons,
chacune des couches cible contenant au moins une image appartenant à un type d'image particulier, et
le groupe d'échantillons est l'un :
d'un groupe d'échantillons d'accès à une sous-couche temporelle (TSA) et le type d'image particulier est un type d'image d'accès à une sous-couche temporelle, ou
d'un groupe d'échantillons d'accès par étapes à une sous-couche temporelle (STSA) et le type d'image particulier un type d'image d'accès par étapes à une sous-couche temporelle ; et
un support de mémorisation de données couplé aux un ou plusieurs circuits de traitement, le support de mémorisation de données étant configuré pour mémoriser le fichier.

8. Dispositif (12, 34) selon la revendication 7, dans lequel les un ou plusieurs circuits de traitement sont configurés de telle sorte que, dans le cadre de la génération de la boîte d'échantillons en groupe dans la boîte de piste, les un ou plusieurs circuits de traitement : incluent, dans la boîte d'échantillons en groupe un élément syntaxique spécifiant une sémantique de la valeur de couches cibles.

9. Dispositif (12, 34) selon la revendication 7,
dans lequel le groupe d'échantillons est applicable à un point d'opération, et
les un ou plusieurs circuits de traitement sont configurés pour signaler, sur la base de la piste contenant des échantillons d'une couche la plus haute du point d'opération, le groupe d'échantillons dans la piste.

10. Dispositif (14) de traitement de données vidéo multicouches utilisant un format de fichier multimédia de base ISO, ISOBMFF, ou un format de fichier basé sur ISOBMFF, le dispositif comprenant :
un support de mémorisation de données configuré pour mémoriser un fichier mémorisant un train binaire multicouche comprenant une séquence de bits qui forme une représentation d'images des données vidéo ; et
un ou plusieurs circuits de traitement couplés au support de mémorisation de données, les ou plusieurs circuits de traitement étant configurés pour :
obtenir, à partir du fichier, une boîte de piste qui contient des métadonnées pour une piste, la piste contenant un contenu multimédia, le contenu multimédia de la piste comprenant une séquence d'échantillons, dans lequel les un ou plusieurs circuits de traitement sont configurés de telle sorte que, dans le cadre de l'obtention de la boîte de piste, les un ou plusieurs circuits de traitement :
obtiennent, à partir de la boîte de piste, une boîte de description d'échantillons contenant une entrée de description de groupe d'échantillons ; et
obtiennent, à partir de la boîte de piste, une boîte d'échantillons en groupe pour la piste, la boîte d'échantillons en groupe mappant des échantillons de la piste sur un groupe d'échantillons, le groupe d'échantillons comprenant des échantillons partageant une propriété spécifiée par l'entrée de description de groupe d'échantillons ;
déterminer, sur la base d'une version de la boîte de description de groupes d'échantillons et de la boîte d'échantillons en groupe égale à 1, des couches cibles parmi des couches présentes dans la piste, la boîte d'échantillons en groupe spécifiant les couches cibles à l'aide d'un paramètre de type de groupement qui spécifie une valeur de couches cibles qui spécifie les couches cibles indiquées parmi toutes les couches présentes dans la piste contenant le groupe d'échantillons et toutes les couches auxquelles font référence, directement et indirectement, les couches qui sont présentes dans la piste contenant le groupe d'échantillons
chacune des couches cible contenant au moins une image appartenant à un type d'image particulier, et
le groupe d'échantillons est l'un :
d'un groupe d'échantillons d'accès à une sous-couche temporelle (TSA) et le type d'image particulier est un type d'image d'accès à une sous-couche temporelle, ou
d'un groupe d'échantillons d'accès par étapes à une sous-couche temporelle (STSA) et le type d'image particulier un type d'image d'accès par étapes à une sous-couche temporelle ; et
identifier qu'un échantillon dans le groupe d'échantillons TSA ou STSA est approprié pour une commutation vers le haut d'une sous-couche temporelle à une sous-couche temporelle particulière sur la base des couches cibles comportant une couche contenant des images codées de la sous-couche temporelle particulière.

11. Dispositif (14) selon la revendication 10, dans lequel les un ou plusieurs circuits de traitement sont configurés pour :
obtenir, à partir de la boîte d'échantillons en groupe, un élément syntaxique spécifiant une sémantique de la valeur de couches cibles ; et
interpréter la valeur de couches cibles conformément à la sémantique spécifiée par l'élément syntaxique pour déterminer les couches cibles.

12. Dispositif (14) selon la revendication 10,
dans lequel le groupe d'échantillons est applicable à un point d'opération, et
les un ou plusieurs circuits de traitement sont configurés en outre pour déterminer, sur la base de la piste contenant des échantillons d'une couche la plus haute d'un point d'opération, que la piste comporte le groupe d'échantillons.

13. Dispositif (14) selon l'une quelconque des revendications 10 à 12, comprenant en outre un dispositif d'affichage pour afficher des données vidéo décodées.

14. Dispositif (14) selon l'une quelconque des revendications 10 à 13, le dispositif (14) étant un dispositif informatique mobile.

15. Support de mémorisation lisible par ordinateur sur lequel sont mémorisées des instructions qui, à leur exécution, amènent un dispositif de traitement de données vidéo à réaliser le procédé selon l'une quelconque des revendications 1 à 6.
